# EUROPEAN PATENT SPECIFICATION

(11) **EP 4 542 732 B1**
(45) Date of publication and mention of the grant of the patent: **19.08.2026**
(21) Application number: 23857677.1
(22) Date of filing: 21.08.2023
(51) Int. Cl.: H01M 10/6568, H01M 10/627, H01M 10/613, F16L 41/00, F16L 9/19

(54) **FLUID TRANSPORT PIPE**
FLUIDTRANSPORTROHR
TUYAU DE TRANSPORT DE FLUIDE

(30) Priority: 25.08.2022 KR 20220106965
(43) Date of publication of application: 23.04.2025
(73) Proprietor: LG Energy Solution, Ltd., Seoul 07335 (KR)
(72) Inventor: JEON, Seung-Joon, Daejeon 34122 (KR); PARK, Dong-Ho, Daejeon 34122 (KR); LEE, Seung-Jun, Daejeon 34122 (KR); LEE, Jong-Soo, Daejeon 34122 (KR); HONG, Sang-Woo, Daejeon 34122 (KR)
(74) Representative: BCKIP Part mbB
(86) International application number: PCT/KR2023/012352
(87) International publication number: WO 2024/043645

(56) References cited:
- CN-A- 113 793 999
- FR-A2- 2 518 699
- GB-A- 1 055 027
- JP-A- 2018 181 761
- KR-A- 20120 086 657
- KR-A- 20170 119 824
- KR-A- 20200 041 007
- US-A- 2 935 341
- US-A- 3 239 251
- US-A- 5 997 048

## Description

### TECHNICAL FIELD OF THE INVENTION

The present invention relates to a pipe for fluid transportation, and more specifically, to a pipe for a cooling fluid that may be applied to a water-cooled cooling system of an Energy Storage System (ESS), and a cooling device and an energy storage system including the same.

### BACKGROUND ART

Recently, as issues such as power shortage and eco-friendly energy have emerged, an energy storage system (ESS) for storing generated power has been receiving a lot of attention. Typically, if such an ESS is used, it is easy to build a power management system such as a Smart Grid System, which allows to easily control power supply and demand in a specific region or city. In addition, as the commercialization of electric vehicles begins in earnest, such an ESS may also be applied to electric charging stations that may charge electric vehicles.

Moreover, the ESS has been distributed for residential use and is increasingly being used widely in each household. For example, a residential ESS may store power generated through solar power provided outside the house or power supplied through commercial power sources or the like, and may supply power required in the house.

The ESS may have a form in which a plurality of battery modules may be accommodated in a rack frame. Also, each battery module may include a plurality of secondary batteries. The ESS includes a large number of secondary batteries, and each secondary battery may generate heat during the charging and discharging process. In addition, a plurality of battery modules may exist densely packed in a narrow space. In addition, the ESS may be placed in seasonally or geographically high-temperature environments, such as summer or deserts.

If this cooling is not performed properly, a thermal event may occur in a specific battery cell or battery module, which may cause failure or damage as well as serious accidents such as ignition or explosion. Also, if thermal runaway propagation occurs between the battery cells or the battery modules crowded in a small space, it may lead to a large-scale fire. Therefore, the ESS needs to be cooled appropriately depending on the situation.

Representative cooling methods for the ESS include air cooling and water cooling. However, in the case of the air cooling method, there is a problem that cooling efficiency is limited and it is vulnerable to ignition. Meanwhile, the water cooling method using a cooling water has the advantage of relatively excellent cooling performance and the ability to actively respond to fires or the like, so it is currently being used more widely in the ESS field. However, there are various problems to be solved in the water cooling method.

In particular, the water cooling system needs to secure a path for fluid such as water to flow in the form of a pipe or the like. Moreover, in systems such as ESS, a plurality of pipes may be installed in various forms. At this time, the assembly process of connecting a plurality of pipes or connecting a pipe to another connection tube or the like, or the work of installing other components in a state where a pipe is installed may not be easily performed. In addition, the fluid flow must be stable between multiple pipes, but if the pipes are long or have complex paths, the fluid flow may be unstable due to insufficient flow rate or velocity. Therefore, the cooling performance of the cooling system may not be sufficient. Also, condensation may occur on the outside of the pipe through which the fluid flows. In particular, if condensation occurs, it may cause problems such as short circuit or ignition.

FR 2518699 A2 discloses a device for connecting a tapping duct to a main duct. The device includes a first flexible part consisting of a tubular part and a lip, and a second flexible part forming a thick annular lip. The annular lip includes a connecting face provided with attachment structures which cooperate with matching attachment structures provided on the tubular part.

US 3 239 251 A discloses a type of joint between tubular members, and more particularly relates to a type of joint between angularly related metal pipe sections of the type used in automotive exhaust systems.

US 2 935 341 A discloses a two-piece nozzle adapter arrangement comprising a larger piece being adjusted on outside of a flexible tubing or hosing and a smaller inside adapter element being positioned partly on inside and partly on outside to connect with the outer element. The outer element is preferably a tubular member of hexagonal or other polygonal structure.

US 5 997 048 A discloses a connection between a fluid line and a connecting member, such as a hydraulic cylinder. The fluid line has an insertion fitting at one end, which fits into a bore in the connecting member. The insertion fitting includes a locking shoulder. The connecting member can hold a locking element, which, when inserted, covers the locking shoulder and secures the fluid line in the bore.

GB 1055027 A discloses a branch coupling for drainpipes. The branch coupling includes an elongated saddle-shaped member with flexible limbs. The outer surface of the member carries a coupling sleeve, and the inner surface carries at least one locating projection. In one design, the coupling sleeve is formed as an outwardly flared funnel. The main pipe end of the funnel lies parallel to the longitudinal axis of the saddle-shaped member, while the funnel axis is inclined, allowing a branch pipe to be connected at different angles.

### DISCLOSURE OF THE INVENTION

### Technical Problem

The present invention is designed to solve the problems of the related art, and therefore the present invention is directed to providing a fluid transport pipe with excellent assembly property, cooling property, condensation prevention performance, and the like, and a cooling device and an energy storage system including the same.

However, the technical problem to be solved by the present invention is not limited to the above, and other problems not mentioned herein will be clearly understood by those skilled in the art from the following invention.

### Technical Solution

To this end, the present invention provides a fluid transport pipe in accordance with claim 1.

According to the present invention, a fluid transport pipe comprises: a main pipe having a shape elongated in one direction and configured to have a main flow path formed therein in a longitudinal direction so that a branch hole is formed in the middle of the main flow path; and a branch pipe having a branch flow path formed therein and configured to be detachable in a portion where the branch hole of the main pipe is formed.

Here, the branch pipe may be configured to be coupled to the main pipe so that an extension direction of the branch flow path is inclined at an acute angle with respect to an extension direction of the main flow path.

According to the present invention, the main pipe has a plurality of conduits therein, the branch pipe is provided in plurality, and at least one of the plurality of branch pipes is configured to be detachable from the plurality of conduits, respectively.

In addition, the plurality of branch pipes may be respectively configured to be coupled to the plurality of conduits in a state of being inclined in the same direction.

In addition, the main pipe may further include a main housing configured to have a hollow so that the plurality of conduits are accommodated together in the hollow.

In addition, the plurality of conduits may be configured to be at least partially spaced apart from an inner surface of the main housing.

In addition, the plurality of conduits may be disposed to be spaced apart from each other by a predetermined distance within the hollow of the main housing.

In addition, the main pipe may be configured so that both longitudinal ends of the main flow path are open.

In addition, the main pipe may have a fastening hole formed around the branch hole, and the branch pipe may be configured to be bolted to the fastening hole of the main pipe.

In addition, the branch pipe may include a branch unit, and the branch unit may include a seating part seated on a surface of the main pipe, and a conduit part having a hollow formed as the branch flow path and configured so that one end thereof is connected to the seating part and extends to be inclined at a predetermined angle from the seating part.

In addition, the main pipe may have a seating groove formed so that the seating part is seated therein.

In addition, the branch pipe may further include a cap unit made of a material with lower thermal conductivity than the branch unit and configured to surround at least a part of the branch unit from the outside.

In addition, the cap unit may include a seating cap configured to surround the seating part from the outside and a conduit cap configured to surround the conduit part from the outside.

In addition, the cap unit may be configured to be at least partially spaced apart from the branch unit by a predetermined distance.

According to the present invention, there is also provided a cooling device, comprising the fluid transport pipe according to the present invention.

According to the present invention, there is also provided an energy storage system, comprising the fluid transport pipe according to the present invention.

### Advantageous Effects

According to the present invention, a water cooling system with excellent process efficiency may be provided.

In particular, in the present invention, in a fluid transport pipe in which a branch pipe is coupled to be inclined at an acute angle from the main pipe, the process of press-fitting another pipe, for example a connection tube connected to a battery module, to the branch pipe may be easily achieved.

In addition, according to the present invention, the process of attaching an insulator or the like to the outer side of the main pipe may be easily performed. Also, in this case, by improving the cover area of the insulation material to minimize exposure of the main pipe to the outside of the insulation material, the insulation effect of the insulation material, especially the condensation suppression effect, may be improved.

In addition, according to the present invention, a water cooling system with excellent cooling properties may be provided. In particular, in an embodiment of the present invention, the flow rate or flux is improved between the main pipe and the branch pipe, so excellent cooling performance may be secured. Moreover, according to this aspect of the present invention, more battery modules may be cooled by the same cooling fluid supply unit, for example the same chiller, compared to the prior art.

In addition, according to the present invention, the energy density of the cooling device and the energy storage system may be improved. In particular, according to an embodiment of the present invention, the number of battery modules can be increased by reducing the number of cooling fluid supply units or the space occupied by the fluid transport pipe.

In addition, according to the present invention, by reducing the protruding size of the branch pipe from the main pipe, other components such as battery modules may be made assembled or replaced more easily.

According to the present invention, a water cooling system may be provided in which condensation can be effectively prevented. Therefore, according to this aspect of the present invention, it is possible to prevent problems such as short circuit or ignition from occurring due to condensation in the ESS or the like to which a cooling system is applied. In addition, according to one aspect of the present invention, since the ESS may be cooled using a cooling water, excellent cooling performance may be secured, and it is possible to actively respond when a fire occurs.

In addition to the above, various other additional effects can be achieved by various embodiments of the present invention. The various effects of the present invention are explained in detail in each embodiment, or effects that can be easily understood by those skilled in the art will not be described in detail.

### DESCRIPTION OF DRAWINGS

The accompanying drawings illustrate a preferred embodiment of the present invention and together with the foregoing invention, serve to provide further understanding of the technical features of the present invention, and thus, the present invention is not construed as being limited to the drawing.
FIG. 1 is a perspective view schematically showing the configuration of a fluid transport pipe according to an embodiment of the present invention.
FIG. 2 is an exploded perspective view schematically showing a partial configuration of the fluid transport pipe according to an embodiment of the present invention.
FIG. 3 is a diagram schematically showing a cross-sectional configuration of the fluid transport pipe according to an embodiment of the present invention.
FIGS. 4 and 5 are diagrams schematically showing the flow of a cooling fluid in different conduits in the fluid transport pipe according to an embodiment of the present invention.
FIG. 6 is a diagram schematically showing the form of the fluid transport pipe according to an embodiment of the present invention viewed from one side.
FIG. 7 is a diagram schematically showing an example of a partial cross-sectional configuration of the fluid transport pipe according to an embodiment of the present invention.
FIG. 8 is a cross-sectional view schematically showing a partial configuration of a fluid transport pipe according to another embodiment of the present invention.
FIG. 9 is an exploded perspective view schematically showing the configuration in which two fluid transport pipes according to an embodiment of the present invention are coupled.
FIG. 10 is a combined perspective view of FIG. 9.
FIG. 11 is a diagram showing the cross-sectional configuration of portion A3 in FIG. 10.
FIG. 12 is an enlarged view showing portion A6 of FIG. 11.
FIG. 13 is an enlarged view showing portion A7 of FIG. 11.
FIG. 14 is a cross-sectional view schematically showing a partial configuration of a fluid transport pipe according to still another embodiment of the present invention.
FIG. 15 is a cross-sectional view schematically showing a partial configuration of the fluid transport pipe according to an embodiment of the present invention.
FIG. 16 is a perspective view schematically showing the configuration of a fluid transport pipe according to still another embodiment of the present invention.
FIG. 17 is an exploded perspective view of the embodiment of FIG. 16.
FIG. 18 is a diagram schematically showing the configuration in which two fluid transport pipes of FIG. 16 are coupled.
FIG. 19 is a diagram schematically showing a partial configuration of the fluid transport pipe according to an embodiment of the present invention.
FIG. 20 is a diagram schematically showing a partial configuration of a cooling device according to an embodiment of the present invention.
FIG. 21 is a diagram schematically showing the configuration of an energy storage system according to an embodiment of the present invention.

### EXEMPLARY EMBODIMENTS OF THE PRESENT INVENTION

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

Therefore, the description proposed herein is just a preferable example for the purpose of illustrations only, not intended to limit the scope of the invention, so it should be understood that other equivalents and modifications could be made thereto without departing from the scope of the invention.

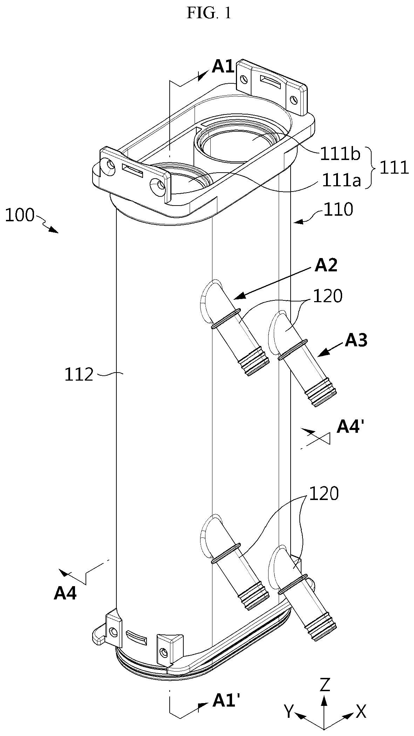

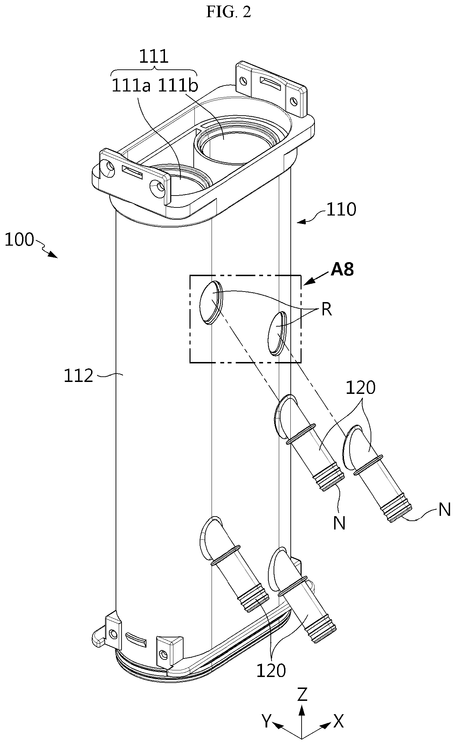

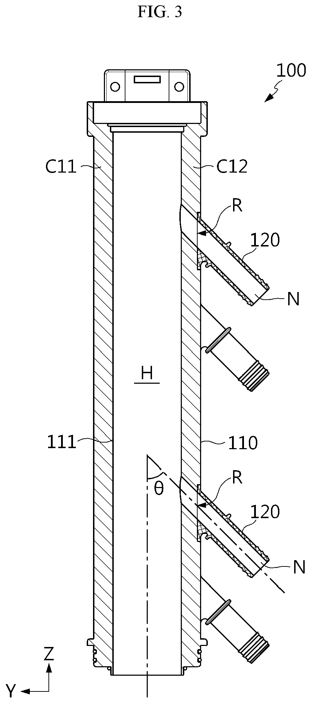

FIG. 1 is a perspective view schematically showing the configuration of a fluid transport pipe 100 according to an embodiment of the present invention. Also, FIG. 2 is an exploded perspective view schematically showing a partial configuration of the fluid transport pipe 100 according to an embodiment of the present invention. In addition, FIG. 3 is a diagram schematically showing a cross-sectional configuration of the fluid transport pipe 100 according to an embodiment of the present invention. For example, FIG. 3 may be a cross-sectional view, taken along line A1-A1' of FIG. 1.

Referring to FIGS. 1 to 3, the fluid transport pipe 100 according to the present invention includes a main pipe 110 and a branch pipe 120.

The main pipe 110 is elongated in one direction. For example, as shown in FIGS. 1 to 3, the main pipe 110 may be configured to elongate in the Z-axis direction (upper and lower direction). Also, the main pipe 110 has a main flow path formed therein, as indicated by H in FIG. 3. At this time, the main flow path H may have a form elongated in the upper and lower direction along the longitudinal direction of the main pipe 110. Fluid, especially a cooling water such as water, may flow through the main flow path H.

In the main pipe 110, a branch hole is formed, as indicated by R in FIGS. 2 and 3. The branch hole R is formed in the middle of the main flow path H. For example, referring to FIGS. 2 and 3, the main flow path H may be elongated in the upper and lower direction, and the branch hole R may be formed in the central portion in the upper and lower direction. Here, the middle or central portion does not mean only the point located exactly in the middle between both ends of the main flow path H, but may broadly refer to the part located therebetween regardless of the distance from both ends.

The branch hole R may be configured to be exposed to the outside of the main pipe 110 in the central portion of the main flow path H. That is, seeing the configuration shown in FIG. 2, in a state where the branch pipe 120 is not coupled to the main pipe 110, the branch hole R may be exposed to the outside of the main pipe 110. Therefore, it may be regarded that the main flow path H is located inside the main pipe 110 in a hollow form, but is exposed to the outside of the main pipe 110 at the portion where the branch hole R is formed.

The branch pipe 120 has a branch flow path formed therein, as indicated by N in FIGS. 2 and 3. The branch pipe 120 may be formed to extend in one direction, and the branch flow path N may be formed to elongate along the extension direction of the branch pipe 120.

The branch pipe 120 may be connected to the portion of the main pipe 110 where the branch hole R is formed. In particular, the branch pipe 120 is configured to be detachable from the main pipe 110. That is, the branch pipe 120 may be mounted to the main pipe 110 or may be separated from the main pipe 110. Moreover, the branch pipe 120 is not configured to be integrated with the main pipe 110, but may be configured to be assembled to the main pipe 110 after the main pipe 110 is pre-installed in a cooling device or an energy storage system.

According to this embodiment of the present invention, since the branch pipe 120 may be appropriately attached to and detached from the main pipe 110 depending on the situation, the assembly property and the process efficiency of the cooling device or the energy storage system may be improved. In particular, a connection tube or the like may be connected to the branch pipe 120 in a press-fit manner to exchange a cooling water or the like with the battery module. At this time, since the connection tube may be press-fitted to the branch pipe 120 in a state where the branch pipe 120 is not coupled to the main pipe 110, the press-fitting process may be performed more easily regardless of the angle between the branch pipe 120 and the main pipe 110. Also, in this case, it is possible to prevent the branch pipe 120 or the main pipe 110 from being damaged or broken during the press-fitting process.

The branch pipe 120 may be configured to be inclined at a predetermined angle with respect to the main pipe 110. In particular, the branch pipe 120 may be configured to be inclined at an acute angle with the main pipe 110. That is, the branch pipe 120 may be configured to be coupled to the main pipe 110 so that the extension direction of the branch flow path N is inclined at an acute angle with respect to the extension direction of the main flow path H. More specifically, referring to FIG. 3, the angle between the extension direction of the branch flow path N and the extension direction of the main flow path H may be expressed as θ. At this time, θ may be an angle smaller than 90 degrees (°). In particular, the branch pipe 120 may be coupled to the main pipe 110 to be inclined at an angle of approximately 45 degrees.

According to this embodiment of the present invention, the flow rate or flux of the cooling fluid may be increased by the Venturi effect, which strengthens the flow rate or flux by sucking in the surrounding residual air currents. Also, in this case, bubbles may be more easily discharged from the inside of the branch pipe 120 or the main pipe 110. Therefore, the cooling performance of the water cooling system may be further improved.

In addition, in this embodiment, the cooling area of a chiller or the like that supplies a cooling fluid may be expanded, based on the same performance. Accordingly, the size or number of chillers may be reduced or the number of cooling targets, for example battery modules, handled by the chiller may be increased.

In addition, according to this embodiment, the degree of protrusion of the branch pipe 120 from the main pipe 110 may be reduced due to the inclined structure. Therefore, a cooling device or an energy storage system may be assembled more easily. For example, when separating or assembling a battery module from/to a cooling device, interference caused by the branch pipe 120 may be reduced. Also, according to this embodiment, by reducing the volume of the cooling device, the size of a cooling target such as a battery module may be increased. Therefore, it may be advantageous to reduce the volume of the cooling device and improve the energy density in the energy storage system or the like.

Moreover, in the fluid transport pipe 100 according to the present invention, a connection tube or the like may be first connected to the branch pipe 120 before the branch pipe 120 is mounted to the main pipe 110. Therefore, the configuration in which the branch pipe 120 is assembled at an acute angle with the main pipe 110 as in this embodiment may be more easily achieved. In particular, in a state where the branch pipe 120 is coupled to the main pipe 110 at an acute angle, for example 45 degrees, the process of press-fitting a connection tube or the like to the end of the branch pipe 120 may not be easy. Moreover, in this case, there may be a risk of damaging the branch pipe 120 or the like. However, according to this embodiment of the present invention, since the connection tube may be press-fitted to the branch pipe 120 before the branch pipe 120 is mounted to the main pipe 110, the above problem may be prevented.

The main pipe 110 has a plurality of conduits 111 therein. Also, a plurality of branch pipes 120 is provided thereto. At this time, at least one branch pipe 120 is configured to be detachable from each of the plurality of conduits 111.

For example, as shown in FIGS. 1 and 2, the main pipe 110 may include two conduits 111. Also, one or more branch pipes 120, for example two branch pipes 120, may be installed/separated to/from each conduit 111. In particular, when the plurality of branch pipes 120 are configured to be detachable for each conduit 111, the plurality of branch pipes 120 may be arranged to be spaced apart from each other by a predetermined distance along the extension direction of each conduit 111. For example, when two branch pipes 120 are mounted to one conduit 111, the two branch pipes 120 may be arranged to be spaced apart by a predetermined distance along the upper and lower direction (Z-axis direction). In this case, it may be regarded that a total of four branch pipes 120 are detachably provided to one main pipe 110.

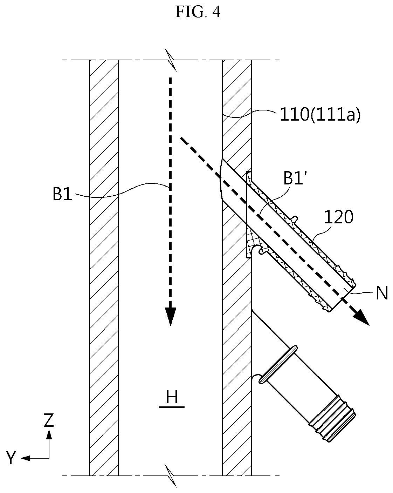

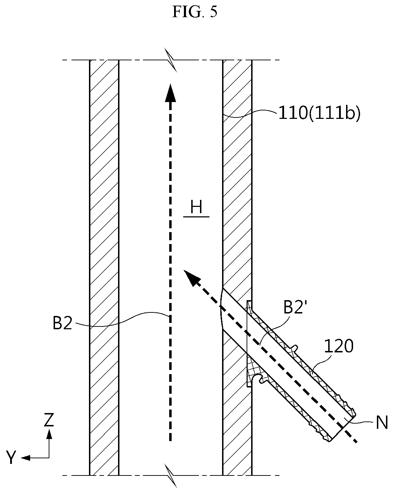

In this embodiment, the cooling fluid may flow in different directions in at least some of the plurality of conduits 111. This will be described in more detail with additional reference to FIGS. 4 and 5.

FIGS. 4 and 5 are diagrams schematically showing the flow of a cooling fluid in different conduits 111 in the fluid transport pipe 100 according to an embodiment of the present invention. For example, FIG. 4 may be regarded as showing the flow of a cooling fluid in portion A2 of FIG. 1, and FIG. 5 may be regarded as showing the flow of a cooling fluid in portion A3 of FIG. 1.

As shown in FIGS. 1 and 2, when two conduits 111, namely a first conduit 111a and a second conduit 111b, are provided in the main pipe 110, one conduit 111, for example the first conduit 111a, may function as an inlet conduit 111, and the other conduit 111, for example the second conduit 111b, may function as an outlet conduit 111. In this case, inside the two conduits 111, the cooling fluid may flow in opposite directions.

More specifically, referring to FIG. 4, the cooling fluid may flow in a lower direction (-Z-axis direction) along the main flow path H inside the first conduit 111a, which is the main pipe 110, as indicated by arrow B1. At this time, a part of the cooling fluid flowing in the first conduit 111a may flow out of the main flow path H through the branch flow path N of the branch pipe 120, as indicated by arrow B1'. The cooling fluid leaked in this way may flow to the inside or surroundings of the battery module.

In addition, referring to FIG. 5, the cooling fluid may flow in an upper direction (+Z-axis direction) along the main flow path H inside the second conduit 111b, which is the main pipe 110, as indicated by arrow B2. At this time, as indicated by arrow B2', the cooling fluid may be introduced from the branch pipe 120 to the second conduit 111b. In other words, the cooling fluid may flow into main flow path H while flowing through the branch flow path N.

In this embodiment, the plurality of branch pipes 120 may be configured to be coupled to each of the plurality of conduits 111a, 111b to be inclined in the same direction.

For example, referring to FIGS. 4 and 5, both the branch pipe 120 connected to the first conduit 111a and the branch pipe 120 connected to the second conduit 111b may be attached to and detached from each conduit 111 in a state of being inclined downward. In particular, all of the branch pipes 120 respectively connected to the first conduit 111a and the second conduit 111b may be connected to extend downward at an angle of approximately 45 degrees based on the extension direction of the main flow path H. That is, the inlet branch pipe 120 and the outlet branch pipe 120 may be mounted to be identically inclined downward at 45 degrees with respect to the main pipe 110.

In particular, for the first conduit 111a, the cooling fluid may flow downward toward the rear side (-Y-axis direction) through the branch flow path N. Also, for the second conduit 111b, the cooling fluid may flow upward toward the front side (+Y-axis direction) through the branch flow path N.

According to this embodiment of the present invention, the Venturi effect may be effectively improved in both the inlet branch pipe as shown in FIG. 4 and the outlet branch pipe as shown in FIG. 5. Therefore, in the process of supplying the cooling fluid to a cooling target such as a battery module or discharging the cooling fluid absorbing heat from the cooling target to the outside, the differential pressure applied to the inlet pipe and the outlet pipe may be reduced, and the flow rate or flux may be significantly increased. Therefore, the cooling efficiency of the entire water cooling system may be further improved. Moreover, in this case, the cooling range may be further expanded even if the same chiller is used.

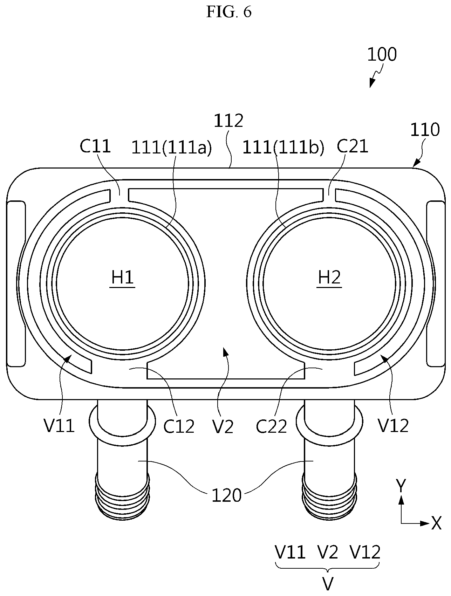

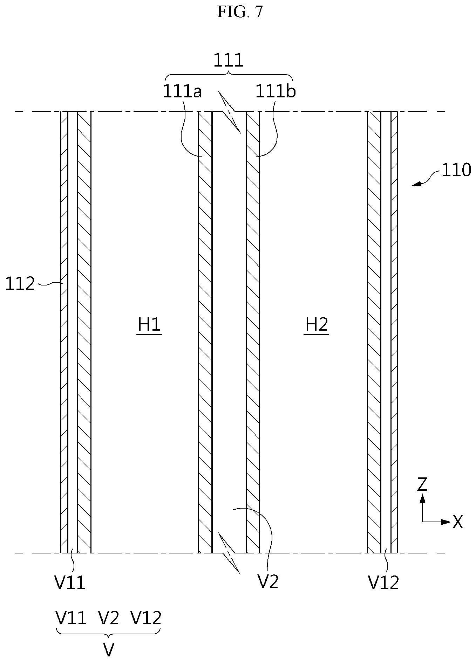

In addition, the main pipe 110 may include a main housing 112. This will be described in more detail with additional reference to FIGS. 6 and 7.

FIG. 6 is a diagram schematically showing the form of the fluid transport pipe 100 according to an embodiment of the present invention viewed from one side. For example, FIG. 6 may be regarded as a diagram showing the configuration of the fluid transport pipe 100 in an erect state according to the present invention, as seen from the top. Also, FIG. 7 is a diagram schematically showing an example of a partial cross-sectional configuration of the fluid transport pipe 100 according to an embodiment of the present invention. For example, FIG. 7 may be regarded as a cross-sectional view, taken along line A4-A4' of FIG. 1.

A hollow may be formed in the main housing 112. For example, the main housing 112 may have an empty space therein, as indicated by V in FIGS. 6 and 7. Also, a plurality of conduits 111 may be accommodated together in this empty space. In particular, the first conduit 111a and the second conduit 111b may be accommodated together in the hollow V of the main housing 112, which is one common space. The main housing 112 may have a form elongated in the longitudinal direction of the plurality of conduits 111a, 111b. For example, referring to FIGS. 1 and 7, the main housing 112 may have a shape elongated in the Z-axis direction. At this time, it may be regarded that the hollow V of the main housing 112 is also formed to elongate in the Z-axis direction.

According to this embodiment of the present invention, since two conduits 111, namely the first conduit 111a and the second conduit 111b, are included inside one main housing 112, a system in which fluid supply and discharge are performed together may be easily implemented just with simple installation. For example, if the fluid transport pipe 100 according to the present invention is installed to allow a cooling water to flow for cooling a battery of a specific device, for example an energy storage system, the cooling water may flow in and out through one pipe. Therefore, a water cooling system for a device such as ESS may be more easily implemented through simple tasks or processes.

In addition, according to this embodiment of the present invention, insulation may be secured and condensation may be effectively prevented from occurring during the cooling fluid transport process. In particular, the fluid transport pipe 100 according to the present invention may be regarded as having a double pipe structure. In other words, when a cooling water flows inside the fluid transport pipe 100, it may be regarded that the space between the cooling water and the outside air is doubly blocked by the conduit 111 and the main housing 112. Therefore, even if the cooling water has a temperature difference from the outside air, condensation may be effectively prevented from occurring on the surface of the fluid transport pipe 100. Accordingly, problems such as short circuit or ignition due to condensation may be prevented from occurring inside a device such as an ESS.

In this embodiment, the branch hole R may be formed in both the conduit 111 and the main housing 112. For example, a hole may be formed in the central portion of the first conduit 111a, and a hole may also be formed in the main housing 112 at a predetermined location corresponding to the hole. Also, the hole of the first conduit 111a and the hole of the main housing 112 may communicate with each other to form a branch hole R together. Also, a hole may be formed in the second conduit 111b, and a hole may be formed in the main housing 112 in a position and shape corresponding to the hole, and these holes may communicate with each other to form a branch hole R.

Moreover, the hole formed in the conduit 111 and the hole formed in the main housing 112 may be integrated with each other. For example, as shown in FIG. 6, each conduit 111 may be connected to the main housing 112 through the connection portion C11, C12, C21, C22. At this time, a hollow is formed in at least some of the connection portions, and both ends of the hollow may be open as the branch hole R to form the hole of the conduit 111 and the hole of the main housing 112. More specifically, a hollow is formed in the connection portion C12, and the open portions at both ends of the hollow may be located at the first conduit 111a and the main housing 112 to serve as the branch hole R. Also, a hollow is formed in the connection portion C22, and the open portions at both ends of the hollow may be located at the second conduit 111b and the main housing 112 to serve as the branch hole R.

If a plurality of conduits 111 are included in the main housing 112, at least one of the plurality of conduits 111 may be configured to be at least partially spaced apart from the inner surface of the main housing 112. In particular, all of the plurality of conduits 111 may be installed to be at least partially spaced apart from the inner surface of the main housing 112.

For example, seeing the embodiment shown in FIGS. 6 and 7, the first conduit 111a and the second conduit 111b may be disposed at the left side and the right side, respectively, inside the hollow V of the main housing 112. At this time, the left outer surface of the first conduit 111a may be configured to be spaced by a predetermined distance from the left inner surface of the hollow of the main housing 112, as indicated by V11. In addition, the right outer surface of the second conduit 111b may be configured to be spaced by a predetermined distance from the right inner surface of the hollow of the main housing 112, as indicated by V12. At this time, it may be regarded that a gas layer, especially an air layer, is formed in V11 between the outer surface of the first conduit 111a and the inner surface of the main housing 112 and in V12 between the outer surface of the second conduit 111b and the inner surface of the main housing 112. That is, the first conduit 111a and the second conduit 111b may be configured so that their surfaces located at sides opposite to the sides facing each other are spaced apart from the inner surface of the main housing 112.

According to this embodiment of the present invention, the effect of preventing condensation may be further improved. In other words, since the air layer formed between each conduit 111 and the main housing 112 functions as an insulating layer, it is possible to more effectively prevent condensation from occurring on the outer surface of the conduit 111 due to the temperature difference between the fluid flowing inside the conduit 111, for example the cooling water, and the outside air.

In addition, the plurality of conduits 111 may be disposed to be spaced apart from each other by a predetermined distance within the hollow V of the main housing 112. In particular, an air layer may be formed between the plurality of conduits 111.

For example, seeing the embodiment of FIGS. 6 and 7, the first conduit 111a and the second conduit 111b are arranged in the left and right directions, but an empty space may be formed between them, as indicated by V2. Moreover, a gas layer, especially an air layer, may be formed in the empty space between the first conduit 111a and the second conduit 111b.

The separation space, or air layer, between the first conduit 111a and the second conduit 111b may function as an insulating layer. This air layer may disturb transfer of heat between the first conduit 111a and the second conduit 111b. In particular, cooling water at different temperatures may flow through the first conduit 111a and the second conduit 111b. For example, the cooling water before absorbing heat from the battery of the ESS may flow through the first conduit 111a, and the cooling water after absorbing heat from the battery of the ESS may flow through the second conduit 111b. In this case, it may be regarded that the cooling water temperature of the second conduit 111b is higher than the cooling water temperature of the first conduit 111a. At this time, the air layer V2 between the first conduit 111a and the second conduit 111b may suppress heat from being transferred from the second conduit 111b to the first conduit 111a. Therefore, the temperature of the cooling water supplied through the first conduit 111a may be well maintained, ensuring more stable cooling performance.

In addition, the first conduit 111a and the second conduit 111b may be mounted parallel to each other inside the hollow V of the main housing 112.

For example, the first conduit 111a and the second conduit 111b may be configured in an elongated form in the upper and lower directions (Z-axis direction), respectively. In particular, the extension directions of the first conduit 111a and the second conduit 111b are parallel to each other, and the separation distance may be maintained constant from the top to the bottom. That is, as indicated by V2 in FIG. 7, the separation space between the first conduit 111a and the second conduit 111b may be kept constant from the top to the bottom.

According to this embodiment of the present invention, the insulation performance between the first conduit 111a and the second conduit 111b may be maintained stably throughout the inner space of the main housing 112.

In addition, in the embodiment of FIG. 7, the separation distance between each conduit 111 and the inner surface of the main housing 112 may be kept constant from one end to the other end. For example, in the space between the first conduit 111a and the inner surface of the main housing 112, as indicated by V11, and the space between the second conduit 111b and the inner surface of the main housing 112, as indicated by V12, the separation distance in the left and right direction may be kept constant from top to bottom.

According to this embodiment of the present invention, the effect of preventing condensation from occurring may be uniformly secured on the whole from one end to the other end of the main housing 112 in the fluid transport direction.

In addition, in the fluid transport pipe 100 according to the present invention, the plurality of conduits 111 may be formed in a circular pipe shape, respectively. For example, referring to FIG. 2, both the first conduit 111a and the second conduit 111b may have horizontal cross-sections formed in a ring shape. That is, the first conduit 111a and the second conduit 111b may be formed in a cylindrical shape with a flow path formed therein. At this time, the flow path of each conduit 111 may also be regarded as being formed in a cylindrical shape.

According to this embodiment, the first conduit 111a and the second conduit 111b may be spaced as much as possible. For example, seeing the embodiment of FIG. 6, the separation space between the first conduit 111a and the second conduit 111b may be secured as wide as possible, as indicated by V2. Therefore, the heat transfer between the fluids flowing inside the first conduit 111a and the second conduit 111b may be minimized. Also, according to this embodiment, fluid may be allowed to flow smoothly inside the first conduit 111a and the second conduit 111b.

In this embodiment, an air layer may be formed between each conduit 111 formed in a circular tube shape and the inner surface of the main housing 112, along the outer shape of each conduit 111. That is, the air layer may be formed to surround at least a part of the outer surface of each conduit 111. For example, seeing the configuration of FIG. 6, a curved surface may be formed on the left outer surface of the first conduit 111a. According to the curved shape of the left side of the first conduit 111a, the air layer may be formed to extend with a uniform thickness from the upper portion of the first conduit 111a to the left portion and the lower portion thereof (V11). In addition, in the embodiment of FIG. 6, a curved surface may be formed on the right outer surface of the second conduit 111b, and the air layer may extend with a uniform thickness along the shape of the curved surface of the right side the second conduit 111b from the upper portion of the second conduit 111b via the right side to the lower portion (V12). In this case, the air layer formed on the outer surface of each conduit 111 may be regarded as being formed in a curved plate shape along the curved shape of the outer side of each conduit 111.

In particular, in the first conduit 111a and the second conduit 111b, an air layer in a curved surface shape may be formed on the curved portion facing the inner surface of the main housing 112. For example, in the first conduit 111a, an air layer in a curved plate shape may be formed on the left outer surface. Also, in the second conduit 111b, an air layer in t a curved plate shape may be formed on the right outer surface.

According to this embodiment of the present invention, the condensation prevention effect according to the insulation performance of the air layer may be achieved uniformly on the whole. For example, in the first conduit 111a, insulation performance by the air layer may be secured uniformly from the upper portion of the left outer surface via the left side to the lower portion. Therefore, the possibility of blind spots occurrence due to condensation may be reduced. Also, according to this embodiment, it is possible to reduce the overall volume of the pipe while forming an abundant insulating layer.

At least one of the first conduit 111a and the second conduit 111b may be coupled and fixed to the inside of the hollow of the main housing 112 through two or more connection portions.

For example, referring to FIGS. 3 and 6, the first conduit 111a may include two connection portions, namely a first front connection portion C11 and a first rear connection portion C12. Also, the first conduit 111a may be coupled and fixed to the inner surface of the main housing 112 through the two connection portions C11, C12. In addition, referring to FIG. 6, the second conduit 111b may include two connection portions, namely, a second front connection portion C21 and a second rear connection portion C22. Also, the second conduit 111b may be coupled and fixed to the inner surface of the main housing 112 through the two connection portions C21, C22.

According to this embodiment of the present invention, the first conduit 111a and the second conduit 111b may stably maintain their positions inside the hollow of the main housing 112. In particular, force may be applied to each conduit 111 while a cooling water is flowing through each conduit 111. At this time, each connection portion may prevent the first conduit 111a and/or the second conduit 111b from moving within the hollow of the main housing 112 by this force.

In addition, according to this embodiment, the separation space, for example an air layer, formed between each conduit 111 and the inner surface of the main housing 112 may be stably maintained through the connection portions provided on the inner side and the outer side of each conduit 111, respectively. Therefore, in this case, the dual structure of the fluid transport pipe 100 according to the present invention, especially the insulation performance by the air layer, may be stably secured. Therefore, the condensation prevention performance may be achieved more reliably.

Moreover, the connection portion may be located at both ends of the first conduit 111a or the second conduit 111b in a direction orthogonal to the arrangement direction of the first conduit 111a or the second conduit 111b.

For example, referring to FIG. 6, the first conduit 111a and the second conduit 111b are arranged in the left and right direction (X-axis direction), and the connection portion may be provided in the front and rear direction (Y-axis direction) of the conduit 111 orthogonal to the left and right direction on the horizontal plane. More specifically, the first connection portions C11, C12 are provided at the front side and the rear side of the first conduit 111a, respectively, and may be coupled and fixed to the inner surface of the main housing 112. Also, the second connection portions C21, C22 are provided at the front side and the rear side of the second conduit 111b, respectively, and may be coupled and fixed to the inner surface of the main housing 112.

According to this embodiment of the present invention, since the connection portion is not provided between the conduits 111, heat transfer between the conduits 111 through the connection portion may be prevented.

In this embodiment, the plurality of connection portions may be configured in different sizes (thicknesses). For example, seeing the embodiment shown in FIG. 6, the rear connection portions C12, C22 may be formed thicker than the front connection portions C11, C21. In particular, the rear connection portions C12, C22 may be located between the conduit 111 and the branch pipe 120. Also, the rear connection portions C12, C22 may have the branch hole R to connect the conduit 111 and the branch pipe 120. That is, the rear connection portions C12, C22 may have a greater thickness in the horizontal direction, especially in the left and right direction, than the front connection portions C11, C21 in order to provide a space for forming the branch hole R.

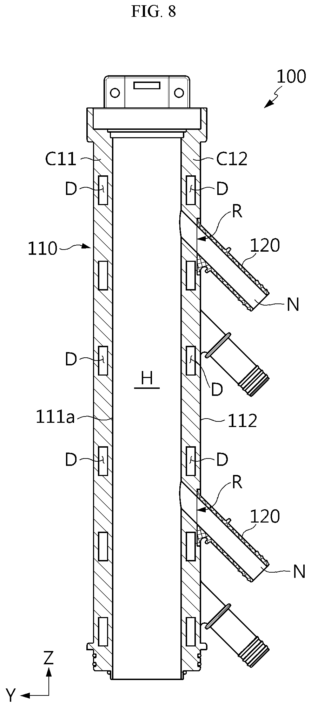

FIG. 8 is a cross-sectional view schematically showing a partial configuration of a fluid transport pipe 100 according to another embodiment of the present invention. For example, FIG. 8 may be regarded as showing another form of a cross-sectional configuration, taken along line A1-A1' of FIG. 1. For various embodiments included in this specification, including this embodiment, features similar or identical to other embodiments will not be described in detail, and features different from other embodiments will be described in detail.

As shown in FIG. 8, a through hole may be formed in the connection portion that fixes each conduit 111 inside the hollow of the main housing 112. More specifically, seeing the embodiment of FIG. 8, one or more through holes, as indicated by D, may be formed in the first front connection portion C11 and the first rear connection portion C12 provided at the front side and the rear side of the first conduit 111a. Also, in the embodiment of FIG. 6, one or more through holes may be formed in the second front connection portion C21 and/or the second rear connection portion C22 provided in the second conduit 111b.

In this embodiment of the present invention, the through hole D may communicate two air layers distinct from each other by the connection portion. For example, in FIG. 6, two air layers V11, V2 separated through the first connection portions C11, C12 may be communicated with each other through the through hole D formed in the first connection portions C11, C12. Also, in FIG. 2, the two air layers C12, V2 separated by the second connection portions C21, C22 may be communicated with each other through the through hole formed in the second connection portions C21, C22.

In particular, the through hole D of the connection portion located between the conduit 111 and the branch pipe 120 may be located in a portion where the branch hole R is not formed. For example, seeing the embodiment of FIG. 8, the first rear connection portion C12 is located between the first conduit 111a and the branch pipe 120. At this time, a plurality of through holes D may be formed in the first rear connection portion C12 along the upper and lower direction. Here, the plurality of through holes D may not be formed in the portion where the branch hole R is located, and may be formed only in the portion where the branch hole R is not located.

According to this embodiment, due to the flow of air between several air layers, the insulation performance of the air layer may be further improved. Also, according to this embodiment, since an air layer is also formed in the central portion of the connection portion, heat transfer through the connection portion between the conduit 111 and the main housing 112 may be prevented or reduced. Therefore, in this case, it is possible to more reliably prevent condensation from occurring on the outer surface of the main housing 112.

The main pipe 110 may be configured so that both longitudinal ends of the main flow path H are open. For example, in the embodiment of FIG. 1, the main pipe 110 may be configured so that both longitudinal ends of the main flow path H formed in each conduit 111 are open. More specifically, seeing the embodiment of FIG. 7, the first flow path H1 may be formed as the main flow path H in the first conduit 111a, and the second flow path H2 may be formed as the main flow path H in the second conduit 111b. At this time, the first flow path H1 and the second flow path H2 may be configured so that the upper and lower ends thereof are open and exposed to the outside, respectively.

In this configuration, the main flow path H allows a cooling fluid to flow in or out through the open end.

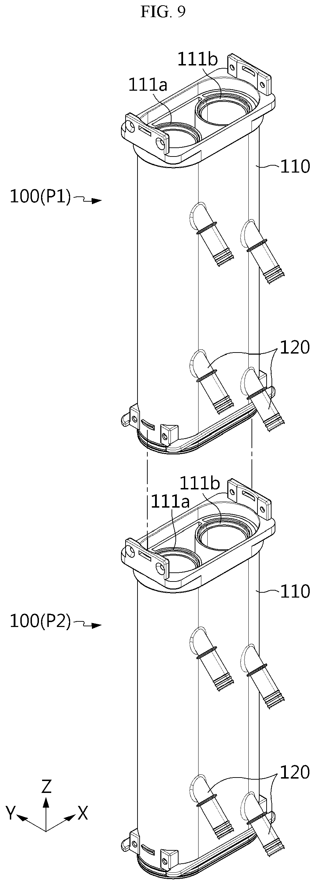

In addition, two or more fluid transport pipes 100 according to the present invention may be coupled. In particular, the fluid transport pipes 100 according to the present invention may be configured to be coupled in a longitudinal direction so that fluid flows between the conduits 111 included in each pipe. This will be described in more detail with reference to FIGS. 9 to 11.

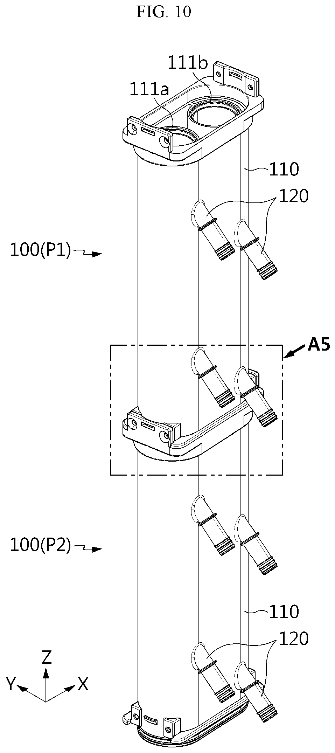

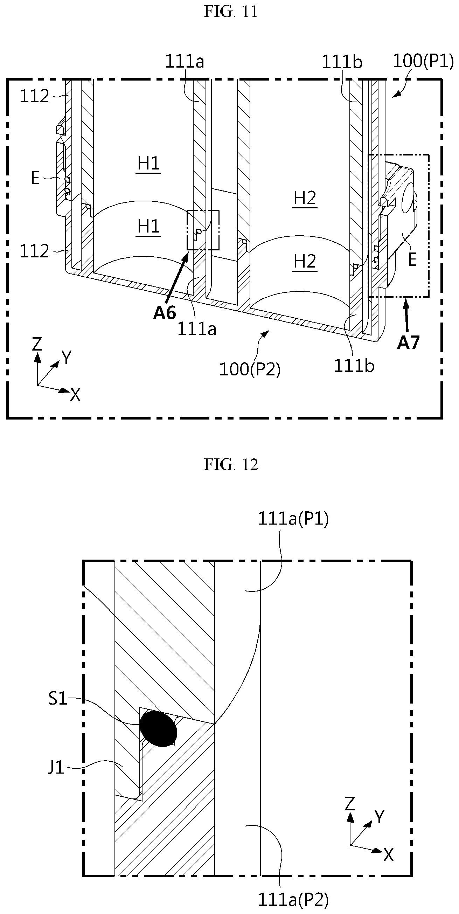

FIG. 9 is an exploded perspective view schematically showing the configuration in which two fluid transport pipes 100 according to an embodiment of the present invention are coupled, and FIG. 10 is a combined perspective view of FIG. 9. Also, FIG. 11 is a diagram showing the cross-sectional configuration of portion A3 in FIG. 10.

Referring to FIGS. 9 to 11, a plurality of fluid transport pipes 100, as indicated by P1 and P2, may be coupled in a longitudinal direction. More specifically, in FIGS. 9 to 11, the first pipe P1 and the second pipe P2 may be elongated in the upper and lower directions, respectively, and located at the upper portion and the lower portion, and may be coupled with each other in the upper and lower direction (Z-axis direction). Also, the first pipe P1 and the second pipe P2 may be configured in the same form.

Here, the conduits 111 included in the fluid transport pipe 100 may be configured so that both open ends are aligned with each other. First, in each fluid transport pipe 100, the upper end and the lower end of the first conduit 111a are open to each other, and the open ends may be configured to be engaged with each other. That is, seeing the first pipe P1 as a reference, the upper end of the first conduit 111a in the first pipe P1 may be configured to communicate with and be fastened to the lower end of the first conduit 111a.

Therefore, when two different fluid transport pipes 100, namely the first pipe P1 and the second pipe P2, are coupled in the upper and lower directions, the lower end of the first conduit 111a included in the first pipe P1 located at the upper portion may be engaged with the upper end of the first conduit 111a included in the second pipe P2 located at the lower portion. At this time, the fastening portions of the first conduits 111a of the two interconnected pipes may be configured to be sealed to each other to prevent the fluid of the first flow path H1 from leaking. Therefore, the cooling water or the like may flow continuously between the first conduits 111a included in two fluid transport pipes 100, for example the first pipe P1 and the second pipe P2.

In addition, in each fluid transport pipe 100, the second conduit 111b may also have an upper end and a lower end that are open to each other, and the open ends may be configured to be engaged with each other. That is, seeing the first pipe P1 as a reference, the upper end of the second conduit 111b in the first pipe P1 may be configured to communicate with and be fastened to the lower end of the second conduit 111b.

Therefore, when two different fluid transport pipes 100, namely the first pipe P1 and the second pipe P2, are coupled in the upper and lower directions, the lower end of the second conduit 111b of the first pipe P1 located at the upper portion may be coupled with the upper end of the second conduit 111b of the second pipe P2 located at the lower portion. At this time, the coupling portions between the second conduits 111b may be configured to be sealed to each other to prevent the fluid of the second flow path H2 from leaking. Therefore, fluid such as a cooling water may flow continuously between the second conduits 111b included in two fluid transport pipes 100.

Although FIGS. 9 to 11 show that only two fluid transport pipes 100 are connected for convenience of explanation, three or more fluid transport pipes 100 may be connected long. In particular, in the case of large devices such as ESS, in order to provide a cooling system to supply a cooling water to a plurality of batteries, a very large number of fluid transport pipes 100 are connected to each other, and at this time, the first conduits 111a and the second conduits 111b of these fluid transport pipes 100 may be connected long to each other.

According to this embodiment of the present invention, a medium or large cooling system may be easily implemented by connecting two different fluid transport pipes 100. In particular, according to this embodiment, the length of the fluid transport path may be freely adjusted by selectively changing the number of fluid transport pipes 100 connected to each other. Therefore, the fluid transport pipe 100 may be provided to be compatible with various types of cooling systems.

The fluid transport pipe 100 according to the present invention may further include an inner sealing portion. This will be described in more detail with additional reference to FIG. 9.

The fluid transport pipe 100 according to the present invention may further include an inner sealing portion. This will be described in more detail with additional reference to FIG. 12.

FIG. 12 is an enlarged view showing portion A6 of FIG. 11.

Referring to FIGS. 11 and 12, the inner sealing portion indicated by S1 may be located at the end of the first conduit 111a. For example, the inner sealing portion S1 may be located at the upper end of the first conduit 111a. In this case, when two different fluid transport pipes 100, for example the first pipe P1 and the second pipe P2, are coupled with each other, the inner sealing portion S1 may be interposed between the two first conduits 111a. Also, as shown in FIG. 11, the inner sealing portion S1 may be located at the end of the second conduit 111b. For example, the inner sealing portion S1 may be located at the upper end of the second conduit 111b. Therefore, when two different fluid transport pipes 100 are coupled to each other, the inner sealing portion S1 may be interposed between the two second conduits 111b.

In particular, the inner sealing portion S1 may be formed in a ring shape and disposed throughout the upper end of the first conduit 111a and/or the second conduit 111b. Moreover, when the first conduit 111a and the second conduit 111b are formed in a circular tube shape, the inner sealing portion S1 may be configured in an O-ring form. The inner sealing portion S1 may be made of an elastic material such as rubber, silicone, or urethane. Alternatively, the inner sealing portion S1 may include an adhesive material.

According to this embodiment of the present invention, in a state where the plurality of fluid transport pipes 100 are connected, the sealing performance between the first conduits 111a and/or the second conduits 111b may be further improved. Therefore, even when fluid such as a cooling water flows through the flow path included in the plurality of fluid transport pipes 100, leakage prevention performance may be secured more stably.

In the fluid transport pipe 100 according to the present invention, each conduit 111 may be configured so that the upper end and the lower end can be fitted and coupled to each other.

For example, as shown in FIG. 12, between different fluid transport pipes 100 stacked in the upper and lower directions, when the lower end of the first conduit 111a located at the upper portion and the upper end of the first conduit 111a located at the lower portion are coupled with each other, the lower end of the first conduit 111a located at the upper portion may be configured to be fitted and coupled to the upper end of the first conduit 111a located at the lower portion. At this time, the end of the first conduit 111a, such as the lower end, may be configured to protrude in the coupling direction, namely the lower direction, as indicated by J1 in FIG. 9. In addition, a concave portion may be formed at the upper end of the first conduit 111a in a position and shape corresponding to the bottom protrusion J1 of the first conduit 111a. Therefore, when the first pipe P1 and the second pipe P2 are coupled in the upper and lower directions, the bottom protrusion J1 of the first conduit 111a of the first pipe P1 may be inserted and fastened into the top concave portion of the first conduit 111a of the second pipe P2.

Meanwhile, although the configuration of the first conduit 111a is shown in FIG. 12, the second conduit 111b may also have this insertion fastening configuration. In other words, the upper end and the lower end of the second conduit 111b may also be configured to be fitted and coupled to each other.

According to this embodiment of the present invention, in a state where two fluid transport pipes 100 are connected to each other, the bonding force and the sealing force between the conduits 111 may be further improved. For example, when a cooling water flows through the conduits 111, the leakage prevention performance of the cooling water may be more reliably achieved due to the insertion and fastening configuration of the conduits 111.

Moreover, according to this embodiment, at the connection portion of the conduits 111, the path for the fluid to escape to the outside may be complicated. For example, in the first flow path H1, the leakage path for the cooling water to leak out through the connection portion of the conduits 111 may be formed long in a bent shape. Accordingly, the sealing performance of the connection portion of the conduits 111 may be further improved.

In addition, in this embodiment, the inner sealing portion S1 may be located at the insertion fastening portion of each conduit 111. For example, as shown in FIG. 12, the inner sealing portion S1 may be interposed in the fastening portion between the bottom protrusion J1 of the first conduit 111a of the first pipe P1 and the top concave portion of the first conduit 111a of the second pipe P2.

In addition, the main housing 112 may be configured so that one end and the other end may be coupled to each other.

For example, referring to FIGS. 9 to 11, two different fluid transport pipes 100 may be connected to each other in the longitudinal direction. At this time, the main housings 112 included in the two fluid transport pipes 100 may be configured so that both longitudinal ends thereof are connectable to each other. More specifically, in the embodiments of FIGS. 9 to 11, when the first pipe P1 and the second pipe P2 are stacked in the upper and lower directions and connected to each other, the lower end of the main housing 112 of the first pipe P1 located at the upper floor and the upper end of the main housing 112 of the second pipe P2 at the lower floor may be configured to be coupled with each other. Here, since the first pipe P1 and the second pipe P2 may be formed in the same shape, it may be regarded that the upper end and the lower end of the pipes are configured to be coupled with each other.

According to this embodiment, due to the coupling configuration of the main housing 112, the connection state between the conduits 111 may be stably maintained. Therefore, it is possible to ensure stable transport of the fluid flowing along the flow path in each conduit 111. Moreover, in this case, it is possible to more reliably prevent water leakage from occurring by securing airtightness at the fastening portion of the conduits 111.

When two different main housings 112 are coupled, they may be connected in various ways. For example, the main housing 112 may be configured to be inserted and fastened to another main housing 112. At this time, one end (for example, the upper end) of the main housing 112 may be configured to protrude in the coupling direction (for example, the upper direction) and be fitted into the other end (for example, the lower end) of the main housing 112. Also, the main housing 112 may be configured to be hooked to another main housing 112. For example, the main housing 112 may have a hook projection at the upper end, and may also have a hook groove at a lower end in a position and shape corresponding to the hook projection.

The main housing 112 may be configured to seal the hollow V therein when two different fluid transport pipes 100 are connected to each other. For example, the main housing 112 may be formed in a tube shape in which the hollow V is formed, so that both ends of the hollow V are open. At this time, the open portions at both ends of the main housing 112 may be formed in a ring shape. For example, the horizontal cross-sectional shape of the open portions at both ends of the main housing 112 may have a substantially oval ring shape. In addition, the main housing 112 may be coupled with the main housing 112 of another fluid transport pipe 100 such that the ring-shaped open portions come into contact with each other to seal the hollow V therein. In this case, it may be regarded that the inner space of the main housing 112 is configured not to communicate with the external space. As a specific example, when the first pipe P1 and the second pipe P2 are coupled as in the embodiment of FIGS. 9 to 11, the hollow of the first pipe P1 and the hollow of the second pipe P2 may communicate with each other to form a common hollow. However, the common hollow may be configured to be sealed without communicating with the external space of each pipe P1, P2.

According to this embodiment of the present invention, the condensation prevention performance may be achieved more effectively. That is, according to this embodiment, in a state where the plurality of fluid transport pipes 100 are connected to each other, since the hollow V of the main housing 112 is sealed, the external air may not easily flow into the interior of the main housing 112. Therefore, even in a situation where the external humidity of the main housing 112 increases, the humidity in the inner space of the main housing 112 may be maintained low. Therefore, it is possible to prevent condensation from occurring on the outer side of the first conduit 111a or the second conduit 111b inside the hollow V of the main housing 112.

In addition, according to this embodiment, the insulation performance of the air layer between the main housing 112 and each conduit 111 located at the hollow of the main housing 112 and the air layer between the conduits 111 may be maintained more stably. Therefore, the problem of condensation occurrence on the outer surface of the main housing 112 may be more effectively prevented.

The main housing 112 may have a cover portion, as indicated by E in FIG. 11. Here, the cover portion E may be provided on at least one end of the main housing 112. For example, the cover portion E may be provided at the upper end of the main housing 112.

In addition, the cover portion E may be configured to extend further in the coupling direction than the first conduit 111a and the second conduit 111b. For example, referring to FIGS. 9 to 11, the cover portion E may protrude further in the upper direction than the first conduit 111a and the second conduit 111b. As another example, the cover portion E is provided at the lower end of the main housing 112 and may protrude further in the lower direction than the lower ends of the first conduit 111a and the second conduit 111b.

In particular, the cover portion E may be configured to surround a portion of the main housing 112 of another fluid transport pipe 100 in a state where two fluid transport pipes 100 are coupled to each other. For example, as shown in FIGS. 9 to 11, the cover portion E located at the upper end of the second pipe P2 may be configured to surround the outer side of the lower end of the main housing 112 of the first pipe P1.

According to this embodiment of the present invention, the fitting configuration between two main housings 112 may be easily implemented by the cover portion E. Therefore, the bonding force between the two fluid transport pipes 100 may be stably secured. Also, according to this embodiment, the coupling between the two main housings 112 may be guided by the cover portion E. Therefore, the work of connecting the plurality of fluid transport pipes 100 may be performed more easily. Moreover, according to this embodiment, the sealing force of the hollow formed inside the main housing 112 between the two fluid transport pipes 100 may be further improved by the cover portion E. Therefore, the condensation prevention performance may be further improved.

Meanwhile, in the former embodiment, it is described that both ends of the hollow of the main housing 112 are open, but the hollow of the main housing 112 may be configured in a closed form for each fluid transport pipe 100. For example, the fluid transport pipe 100 according to the present invention may be configured in a form in which only both ends of the first conduit 111a and the second conduit 111b are open, and both ends of the main housing 112 are not open but closed. In this case, the insulation performance of the air layer by the hollow V may be secured more stably. In addition, even if condensation occurs inside the hollow of the main housing 112, such condensation is prevented from being discharged to the outside of the fluid transport pipe 100, thereby preventing various problems such as short circuits or ignition. In addition, in this case, since a separated hollow V is formed for each fluid transport pipe 100, even if a crack or the like occurs in a specific fluid transport pipe 100 and the sealing state of the hollow V is released, the sealing state of the hollow V of another fluid transport pipe 100 may be maintained as is.

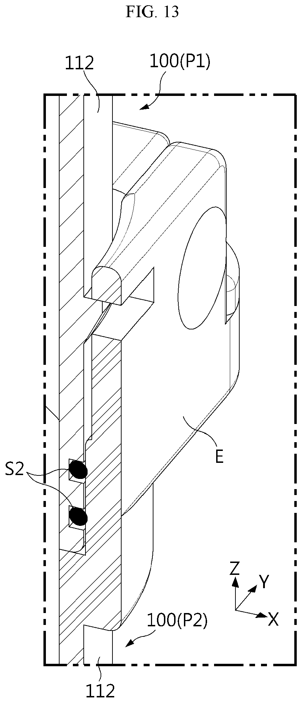

The fluid transport pipe 100 according to the present invention may further include an outer sealing portion. This will be described in more detail with additional reference to FIG. 13 along with FIG. 11.

FIG. 13 is an enlarged view showing portion A7 of FIG. 11.

Referring to FIGS. 11 and 13, the fluid transport pipe 100 according to the present invention may further include an outer sealing portion provided on the outer surface of the end of the main housing 112. More specifically, in the embodiment of FIG. 13, the outer sealing portion as indicated by S2 may be provided at the lower end of the main housing 112 of the first pipe P1. The outer sealing portion S2 may be formed in a ring shape to surround the outer side of the main housing 112. Also, the outer sealing portion S2 may be made of an elastic material such as rubber, silicone, or urethane. In addition, the outer sealing portion S2 may have an adhesive material. Moreover, as shown in FIG. 13, two or more outer sealing portions S2 may be provided to be spaced apart from each other in the coupling direction of the fluid transport pipe 100, for example the upper and lower direction (Z-axis direction).

According to this aspect of the present invention, the sealing power of the hollow V at the coupling portion of the main housing 112 may be further improved. Therefore, the insulation performance of the air layer formed by the hollow V may be secured more stably, and the condensation prevention effect or the like may be further improved.

Moreover, when the main housing 112 includes the cover portion E, the outer sealing portion S2 may be provided in a portion coupled to the cover portion E. For example, the outer sealing portion S2 may be located in a portion of the first pipe P1 that is inserted into the cover portion E of the second pipe P2. At this time, the outer sealing portion S2 may contact the inner surface of the cover portion E of the second pipe P2.

In addition, the outer sealing portion S2 may be disposed to be inserted inward at the outer surface of the main housing 112. In this case, a ring-shaped groove may be formed on the outer surface of the main housing 112 so that the outer sealing portion S2 may be inserted. For example, as shown in FIGS. 11 and 13, a groove may be formed on the outer surface of the main housing 112 to be concave in the inner horizontal direction toward the hollow. Also, this groove may be formed on at least a part of the outer surface of the main housing 112. In particular, the groove may be formed to surround the outer surface of the main housing 112 in one circle. Also, the outer sealing portion S2 in an O-ring form may be inserted into the groove.

According to this embodiment of the present invention, the position of the outer sealing portion S2 on the outer surface of the main housing 112 may be maintained stably. In particular, when two fluid transport pipes 100 are connected, the outer sealing portion S2 may be prevented from moving. Therefore, the sealing performance by the outer sealing portion S2 may be further improved.

At least a part of the fluid transport pipe 100 according to the present invention may be manufactured by injection molding. For example, the main pipe 110, particularly the first conduit 111a, the second conduit 111b, and the main housing 112 may be manufactured in an integrated form using an injection molding method. In particular, the fluid transport pipe 100 according to the present invention may be manufactured relatively easily using an injection molding method in a double pipe form that can prevent condensation.

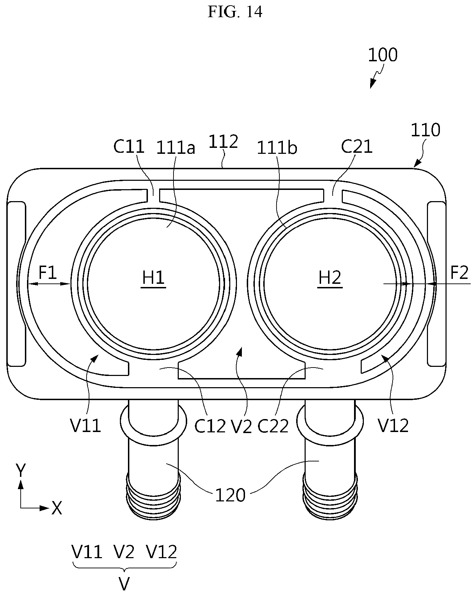

FIG. 14 is a cross-sectional view schematically showing a partial configuration of a fluid transport pipe 100 according to still another embodiment of the present invention. For example, FIG. 14 may be regarded as a modified example of the configuration of FIG. 6.

Referring to FIG. 14, the first conduit 111a and the second conduit 111b may have different separation distances from the inner surface of the main housing 112. More specifically, in the embodiment of FIG. 14, the horizontal distance (distance in the left and right direction) between the outer surface of the first conduit 111a and the left inner surface of the main housing 112 may be expressed as F1, and the horizontal distance (distance in the left and right direction) between the outer surface of the second conduit 111b and the right inner surface of the main housing 112 may be expressed as F2. At this time, F1 may be designed to be longer than F2. In this embodiment, it may be regarded that the first conduit 111a is configured to be spaced further away from the inner surface of the main housing 112 than the second conduit 111b. Also, in this embodiment, the outer hollow V11 around the first conduit 111a may be regarded as being wider than the outer hollow V12 around the second conduit 111b.

According to this embodiment, the insulation performance between the first conduit 111a and the second conduit 111b by the hollow may be set differently. In other words, since the hollow V11 at the outer portion of the first conduit 111a is wider than the hollow V12 at the outer portion of the second conduit 111b, it may be regarded that the insulation performance of the first conduit 111a is secured better than that of the second conduit 111b.

In particular, fluids with different temperatures may flow through the first conduit 111a and the second conduit 111b. For example, a low-temperature cooling water before cooling the battery may flow through the first conduit 111a, and a high-temperature cooling water after cooling the battery may flow through the second conduit 111b. Therefore, there is a high possibility that condensation is formed on the left outer surface of the main housing 112 where the first conduit 111a is located. However, according to this embodiment, since the insulation layer on the left side is formed thick, it is possible to more reliably prevent condensation from occurring on the left outer surface of the main housing 112. That is, in this embodiment, the condensation prevention performance may be further improved by allowing a low-temperature fluid to flow through the portion where the air layer is formed widely.

The fluid transport pipe 100 according to the present invention may include a polymer material. For example, in the fluid transport pipe 100 according to the present invention, at least a part of the main pipe 110 and the branch pipe 120 may be made of PA (PolyAmide) material. However, the fluid transport pipe 100 according to the present invention is not limited to this specific material and may be made of various other materials, such as various other plastic materials.

In addition, the fluid transport pipe 100 according to the present invention may further include an insulating material, particularly a foam insulation material. For example, the foam insulation material may be made of NBR (Nitrile Butadien Rubber). This insulating material may be attached to the outer surface of the main housing 112 to further improve the condensation prevention performance of the fluid transport pipe 100.

In particular, the main housing 112 may have a flat surface on its outer surface. More specifically, as shown in FIGS. 1 and 2, the main housing 112 may have flat front and rear surfaces and rounded left and right surfaces. In this case, the foam insulation material may be easily attached to surround the outer surface of the main housing 112. Therefore, the process efficiency for attaching the foam insulation material may be improved, and the effect of improving condensation prevention performance by the foam insulation material may be further increased.

Moreover, in the fluid transport pipe 100 according to the present invention, the branch pipe 120 may be configured to be detachable from the main pipe 110. Therefore, the process of mounting an insulation material to the outer side of the main pipe 110 may be more easily implemented. That is, in a state where the branch pipe 120 is not mounted to the main pipe 110, the insulation material may be attached to surround the outer surface of the main pipe 110. When attaching the insulating material, since there is no protruding portion outside the main pipe 110 such as the branch pipe 120, the insulating material may be easily and precisely attached to the outer surface of the main pipe 110. Also, the branch pipe 120 may be installed to the main pipe 110 after the insulation material is attached to the outer side of the main pipe 110. Accordingly, the assembly properties between the branch pipe 120 and the main pipe 110 and between the main pipe 110 and the insulation material may be improved. Also, in this case, the insulation material is attached to the main pipe 110 in as large an area as possible, and the exposed area of the main pipe 110 may be minimized.

In addition, according to this embodiment, the insulation material may be easily replaced. In other words, if the insulation material is damaged or broken during use of the fluid transport pipe 100, it may be required to replace the insulation material. At this time, the branch pipe 120 may first be separated from the main pipe 110, then the existing insulation material may be removed from the main pipe 110, and a new insulation material may be attached to the main pipe 110. Also, the branch pipe 120 may be installed to the main pipe 110 after the new insulation material is completely attached. At this time, when removing the existing insulation material or attaching a new insulation material, there is no interference from the branch pipe 120, so the replacement process of the insulation material may be easily performed.

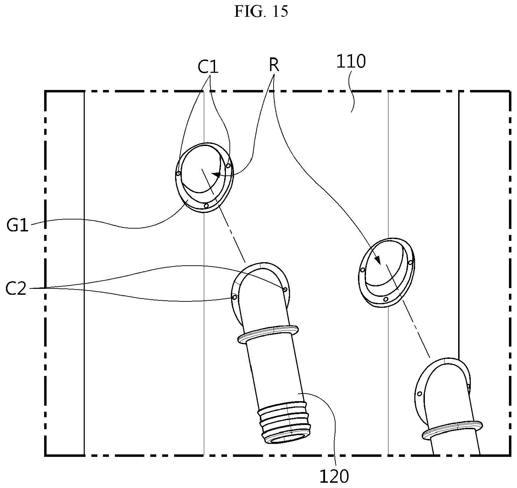

FIG. 15 is a cross-sectional view schematically showing a partial configuration of the fluid transport pipe 100 according to an embodiment of the present invention. For example, FIG. 15 may be regarded as showing show an example of an enlarged configuration of portion A8 of FIG. 2.

Referring to FIG. 15, the main pipe 110 may have a first fastening hole formed, as indicated by C1. In particular, this first fastening hole C1 may be provided around the branch hole R in the main housing 1112. Moreover, the first fastening hole C1 is provided in plurality, and the plurality of first fastening holes C1 may be arranged to be spaced apart by a predetermined distance along the edge of the branch hole R. For example, three first fastening holes C1 may be disposed around the branch hole R. At this time, the three first fastening holes C1 may be arranged at intervals of predetermined angles, namely 120 degrees, based on the center point of the branch hole R.

In this configuration, the branch pipe 120 may be configured to be bolted to the first fastening hole C1 of the main pipe 110. For example, the branch pipe 120 may have a second fastening hole in a location and shape corresponding to the first fastening hole C1 of the main pipe 110, as indicated by C2 in FIG. 15. Also, in a state where the branch pipe 120 is mounted to the main pipe 110, the second fastening hole C2 may communicate with the first fastening hole C1 and be fastened and fixed by a common bolt (not shown). As another example, the branch pipe 120 may have a protrusion or hook shaped to be inserted into the first fastening hole C1 of the main pipe 110. Also, by inserting and fastening the protrusions or hook into the first fastening hole C1, the branch pipe 120 may be mounted and fixed to the main pipe 110.

According to this embodiment of the present invention, the configuration of assembling or disassembling the branch pipe 120 to/from the main pipe 110 may be more easily implemented. Also, in this case, the coupling force between the branch pipe 120 and the main pipe 110 may be stably secured. In particular, when a plurality of first fastening holes C1 are formed at a predetermined angle around the branch hole R, uniform fastening force may be secured.

In addition, a sealing member (not shown) may be further included between the branch pipe 120 and the main pipe 110. For example, the sealing member may be provided in an O-ring form around the branch hole R of the main pipe 110 and/or around the coupling end of the branch pipe 120. Here, the sealing member may be made of an elastic material such as rubber, silicone, or urethane, or a foam material. According to this embodiment, the sealing performance may be further improved in the coupling portion between the branch pipe 120 and the main pipe 110.

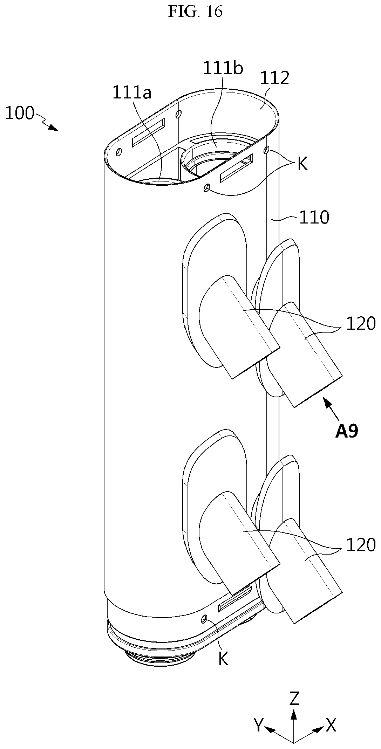

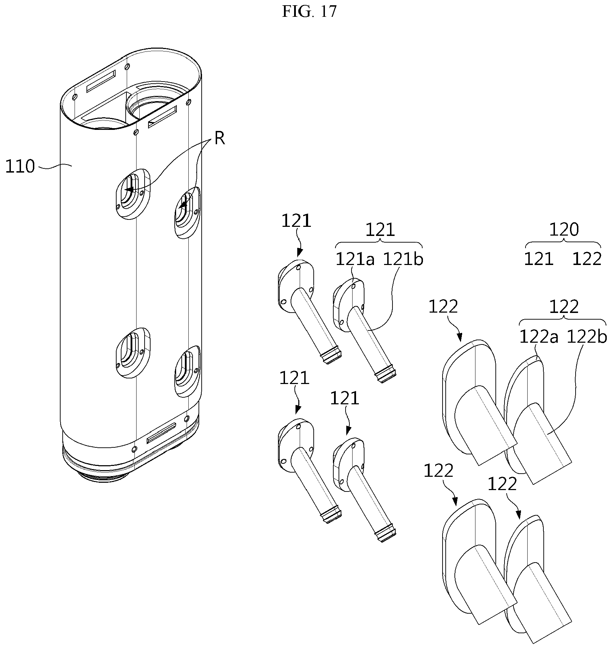

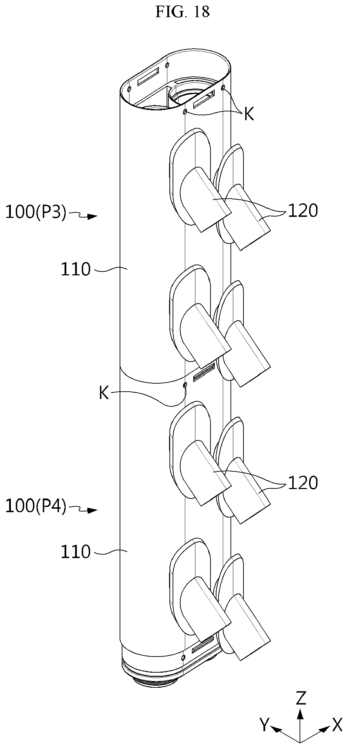

FIG. 16 is a perspective view schematically showing the configuration of a fluid transport pipe 100 according to still another embodiment of the present invention. FIG. 17 is an exploded perspective view of the embodiment of FIG. 16. Also, FIG. 18 is a diagram schematically showing the configuration in which two fluid transport pipes 100 of FIG. 16 are coupled. Even in this embodiment, features different from the former embodiments will also be described in detail.

Referring to FIGS. 16 and 18, the fluid transport pipe 100 is formed generally similarly to the fluid transport pipe 100 of FIGS. 1 to 15, but may be formed to have a flatter shape on the whole with almost no protruding portion on the outer surface. In particular, referring to FIG. 16, the fluid transport pipe 100 may be configured to have a flat surface from one end to the other end in the longitudinal direction (Z-axis direction), for example from the top to the bottom, with no protruding parts on the whole, except for the branch pipe 120. Moreover, referring to the drawings such as FIGS. 11 and 12, the fluid transport pipes 100 have the cover portion E at the ends that are coupled to each other, and the cover portion E may be configured to protrude in the horizontal direction further to other surfaces. However, in the fluid transport pipe 100 shown in FIG. 16, the coupling portion at the end side is also configured to be flat without protruding in the horizontal direction. Moreover, as shown in FIG. 18, in a state where the two fluid transport pipes 100 (P3, P4) are coupled to each other, the coupling portion has no externally protruding portion, and may maintain a flat state with other surfaces of the main pipe 110 except the branch pipe 120.

According to this embodiment of the present invention, the coupling portion of the main pipe 110 in the fluid transport pipe 100 is formed flat and smooth, so the process efficiency may be further improved when attaching the foam insulation material or the like. In addition, in the above configuration, as the portion protruding from the main pipe 110 is removed or reduced, the insulation effect by the foam insulation material may be further improved by expanding the portion surrounded by the foam insulation material or improving the sealing properties of the foam insulation material. Also, in this case, there is an advantage in appearance, and also interference with other surrounding components may be minimized by reducing the protruding portion at the outer side of the fluid transport pipe 100.

Moreover, according to one embodiment of the present invention, the branch pipe 120 may be configured to be detachable from the main pipe 110, as in the embodiment of FIG. 17. Therefore, before the branch pipe 120 is mounted to the main pipe 110, a foam insulating material or the like may be provided to surround the outer side of the main pipe 110 first. At this time, as shown in FIG. 17, if the outer surface of the main pipe 110 itself is formed flat, the process of attaching the insulation material may be performed more smoothly.

In addition, referring to FIG. 17, the branch pipe 120 may include a branch unit 121. The branch unit 121 may be configured to be mounted to the main pipe 110, especially the main housing 112 of the main pipe 110. Here, the branch unit 121 may include a seating part 121a and a conduit part 121b.

The seating part 121a is a part that is seated on the surface of the main pipe 110, and may have a shape that may be easily seated the surface of the main pipe 110. For example, the seating part 121a may be configured in a plate shape so that the inner surface thereof may be seated on the outer surface of the main housing 112 of the main pipe 110. Here, the inner surface of the seating part 121a may be configured to be parallel to the outer surface of the main housing 112.

A hollow may be formed inside the conduit part 121b, and the hollow of the conduit part 121b may serve as the branch flow path N. One end, for example the inner end, of the conduit part 121b may be connected to the seating part 121a. Also, the conduit part 121b may be formed to extend in a shape inclined at a predetermined angle from the seating part 121a. That is, the extension direction of the conduit part 121b may be inclined to form a predetermined angle, particularly an acute angle, with the direction formed by the surface of the seating part 121a. As a more specific example, when the plate-shaped seating part 121a is erected in a direction parallel to the Z-axis, the conduit part 121b may have an inclined shape so as to form an angle of 45 degrees with the Z-axis. According to this embodiment, as described above, there may be the effect of improving the flow rate or flux in the branch pipe 120.

The seating part 121a may be bolted to the main pipe 110, similar to the embodiment described in FIG. 15. In this case, a fastening hole similar in shape to the second fastening hole C2 of FIG. 15 may be formed in the seating part 121a for bolting.

In this embodiment, the seating part 121a and the conduit part 121b may be formed as one piece. For example, both the seating part 121a and the conduit part 121b are made of PA material and may be manufactured integrally by injection molding. However, the present invention is not necessarily limited to this form.

In addition, the main pipe 110 may have a seating groove, as indicated by G1 in FIG. 15. The seating groove G1 may be configured so that the branch unit 121 of the branch pipe 120, particularly the edge portion of the seating part 121a, may be seated therein. Moreover, the seating groove G1 may be configured to be concave inward further to other portions around the branch hole G1 of the main pipe 110. In this case, the seating part 121a of the branch pipe 120 may be inserted and seated in the seating groove G1.

According to this embodiment of the present invention, since the seating groove G1 guides the mounting position of the branch pipe 120, the process of assembling the branch pipe 120 to the main pipe 110 may be performed easily. Also, according to this embodiment, the coupling force between the branch pipe 120 and the main pipe 110 may be improved by the seating groove G1. For example, the seating groove G1 may suppress the movement in the left and right direction (X-axis direction) and the upper and lower direction (Z-axis direction) in a state where the branch pipe 120 is mounted around the branch hole R of the main pipe 110.

In addition, the branch pipe 120 may further include a cap unit 122, as shown in FIG. 17.

The cap unit 122 may be made of a different material from the branch unit 121. In particular, the cap unit 122 may be made of a material with lower thermal conductivity than the branch unit 121. For example, the cap unit 122 may be made of an insulating material such as rubber or foam. The cap unit 122 may be configured to surround at least a part of the branch unit 121 from the outside. The cap unit 122 may be fastened and fixed to the branch unit 121 by fitting, or may be fixed to the branch unit 121 or the main pipe 110 through a separate adhesive or bolting connection.

According to this embodiment of the present invention, since the branch pipe 120 is configured in a double pipe form, the insulation of the branch pipe 120 may be improved. Therefore, the condensation suppression effect in the branch pipe 120 may be further improved. Also, according to this embodiment, it is possible to prevent the branch unit 121, which directly forms the branch flow path N from being damaged or broken due to external impacts or substances. Accordingly, the water leak prevention effect for the branch pipe 120 may be achieved more stably. Also, according to this embodiment, the branch unit 121 may be more strongly coupled to the main pipe 110 by the cap unit 122.

The cap unit 122 may include a seating cap 122a and a conduit cap 122b, as shown in FIG. 17.

The seating cap 122a may be configured to surround the seating part 121a of the branch unit 121 from the outside. For example, when the seating part 121a is configured in a plate shape, the seating cap 122a may also be configured in a substantially plate shape to cover the outer surface of the seating part 121a. In particular, the seating cap 122a may cover the entire outer surface of the seating part 121a so that the seating part 121a is not exposed to the outside. To this end, the surface area of the seating cap 122a may be configured to be larger than the surface area of the seating part 121a. Also, the seating cap 122a may have a receiving groove on the inner surface thereof to accommodate the seating part 121a. In this case, the seating cap 122a may be attached to the outer surface of the main pipe 110 in a state where the seating part 121a is accommodated in the receiving groove. At this time, the seating cap 122a may be coupled and fixed to the main pipe 110, for example the main housing 112, using bolts or adhesives.

The conduit cap 122b may be configured to surround the conduit part 121b of the branch unit 121 from the outside. In particular, since the conduit part 121b may be configured in a tubular shape, the conduit cap 122b may also be configured in a tubular shape. In other words, the conduit cap 122b has a hollow, and the conduit part 121b may be inserted into the hollow. At this time, the inner diameter of the hollow of the conduit cap 122b may be larger than the outer diameter of the conduit part 121b. In particular, the conduit cap 122b may cover the entire outer surface of the conduit part 121b so that the conduit part 121b is not exposed to the outside. For this purpose, the length of the conduit cap 122b may be equal to or greater than the length of the conduit part 121b. In this case, as shown in FIG. 16, it may be regarded that the cap unit 122 is configured to surround the entire portion of the branch unit 121 from the outside so that the branch unit 121 is not directly exposed to the outside.

In the cap unit 122, the seating cap 122a and the conduit cap 122b may be formed as one piece. That is, the seating cap 122a and the conduit cap 122b are made of the same material and may be manufactured in an integrated form. Also, the conduit cap 122b may be configured to be inclined at a predetermined angle with the seating cap 122a. That is, similar to as the branch unit 121 in which the conduit part 121b is configured to be inclined at a predetermined angle with the seating part 121a, in the cap unit 122, the conduit cap 122b may be configured to be inclined at a predetermined angle with the seating cap 122a to correspond to the inclined shape of the branch unit 121. For example, the conduit cap 122b may have an inclined shape so as to form an angle of approximately 45 degrees with the surface of the seating cap 122a.

According to this embodiment of the present invention, the insulation at the portion where the flow path branches, namely the connection portion between the main pipe 110 and the branch pipe 120, may be secured more stably. Therefore, the effect of suppressing condensation at the flow path branch portion may be further improved. Also, according to this embodiment, the branch pipe 120 may be easily assembled to the main pipe 110. Moreover, when the insulating material is provided to surround the outer side of the main housing 112, the insulating material may be more stably and tightly coupled to the outer side of the main housing 112.

In addition, in this embodiment, the seating cap 122a may suppress external exposure of bolts or the like coupled to the seating part 121a. Accordingly, corrosion or damage to the bolt may be minimized, and electrical insulation may be secured.

Moreover, when the seating groove G1 is formed in the main pipe 110 as shown in FIG. 15, the seating cap 122a may be configured to entirely cover the seating groove G1. In this case, external exposure of the seating groove G1 is suppressed, and the effect of preventing the inflow and outflow of fluid or foreign substances at the seating groove G1 portion may be improved.

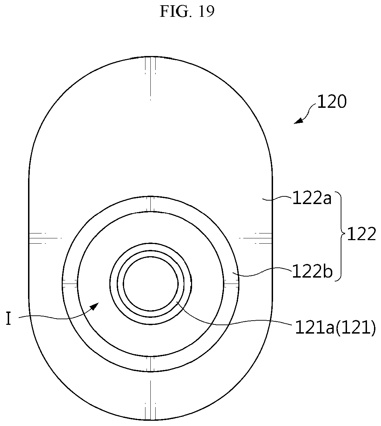

FIG. 19 is a diagram schematically showing a partial configuration of the fluid transport pipe 100 according to an embodiment of the present invention. In particular, FIG. 19 may be regarded as an example of the configuration of FIG. 16, when the branch pipe 120 is viewed in the direction of arrow A9.

Referring to FIG. 19, the cap unit 122 may be configured to be at least partially spaced apart from the branch unit 121 by a predetermined distance. In particular, the conduit cap 122b of the cap unit 122 may be configured to be spaced from the conduit part 121b by a predetermined distance. Moreover, conduit cap 122b and conduit part 121b may be formed in a hollow tube shape, respectively, and the inner diameter of the conduit cap 122b may be larger than the outer diameter of the conduit part 121b. In this case, a predetermined space may be formed between the inner surface of the conduit cap 122b and the outer surface of the conduit part 121b, as indicated by I in FIG. 19. In particular, the conduit part 121b and the conduit cap 122b may be configured to be spaced by a predetermined distance apart on the whole. This separation space may have a shape that entirely surrounds the periphery of the conduit part 121b.

According to this embodiment of the present invention, an air layer may be formed as an insulating layer between the cap unit 122 and the branch unit 121. Therefore, the condensation suppression effect on the branch pipe 120 may be further improved. Also, in this case, since vibration or impact is not easily transmitted between the cap unit 122 and the branch unit 121, the effect of preventing damage or breakage may be achieved. For example, a shock applied from the outside to the cap unit 122 may not be easily transmitted to the branch unit 121. Also, vibration that occurs when a cooling fluid flows inside the branch unit 121 may not be easily transmitted to the cap unit 122. Accordingly, the mechanical stability of the cap unit 122 and the branch unit 121 may be improved.

In addition, referring to FIG. 16, the main housing 112 may be configured to be bolted to another main housing 112. For example, in the main housing 112, bolting holes may be formed at corresponding positions at the top and the bottom, as indicated by K. Accordingly, as shown in FIG. 18, when two fluid transport pipes 100 (P3, P4) are coupled in the upper and lower directions, the bolting hole K at the coupling portion may communicate with each other. In addition, fastening members such as bolts are inserted into the bolting holes K so that the two fluid transport pipes 100 (P3, P4) may be connected and fixed to each other. Moreover, the portion where the bolting hole K is formed in the main housing 112 may be formed so as not to protrude outward. According to this embodiment, when covering the fluid transport pipe 100 with an insulating material or the like, the process efficiency may be improved by preventing the insulating material or the like from getting caught in the portion where the bolting hole K is formed.

In addition, as shown in FIG. 16, the main housing 112 may have a hook structure formed at the coupling end. Therefore, when two main pipes 110 are coupled to each other in the longitudinal direction, the hook structures located at the ends of the main pipes 110 may be coupled to each other.

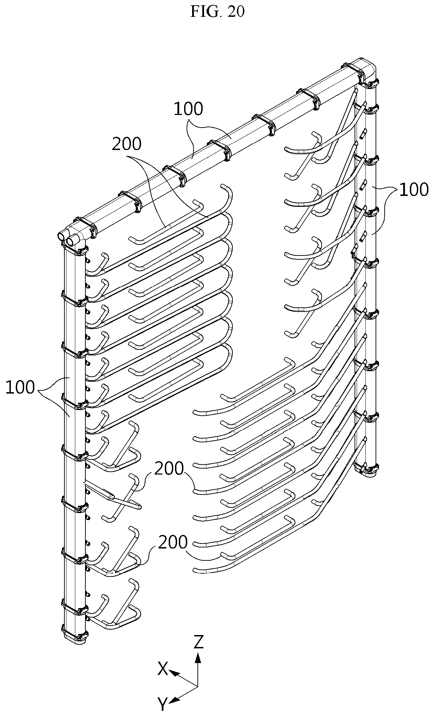

FIG. 20 is a diagram schematically showing a partial configuration of a cooling device according to an embodiment of the present invention.

Referring to FIG. 20, the cooling device according to the present invention includes the fluid transport pipe 100 according to the present invention. In particular, the cooling device according to the present invention may include a plurality of fluid transport pipes 100 according to the present invention. At this time, the plurality of fluid transport pipes 100 may be coupled in the longitudinal direction.

Moreover, the coupled body of the plurality of fluid transport pipes 100, namely a pipe assembly, may be configured to be bent one or more times. For example, as shown in FIG. 20, the pipe assembly may be configured to be bent twice. At this time, the pipe assembly may include two portions extending in the vertical directions (Z-axis direction) and one portion extending in the horizontal direction (Y-axis direction). In this case, the bent portion of the pipe assembly may have a bent pipe that connects the fluid transport pipes 100 extending in different directions.

Between the plurality of fluid transport pipes 100, between the first conduits 111a, and between the second conduits 111b, the hollow is extended so that the open ends may be coupled to each other to allow fluid, especially a cooling water, to flow.

In addition, the cooling device according to the present invention may further include one or more connection tubes 200, as shown in FIG. 20. The connection tube 200 may be connected directly or indirectly to the fluid transport pipe 100. For example, one end of the connection tube 200 may be directly connected to the branch pipe 120 of the fluid transport pipe 100, and the other end may be connected to a cooling target, for example a battery module. In this case, the connection tube 200 may be configured to supply the cooling water supplied from the branch pipe 120 of the fluid transport pipe 100 to the battery module, or to transfer the cooling water discharged from the battery module to the branch pipe 120 of the fluid transport pipe 100. Alternatively, the connection tube 200 may be configured to allow fluid to flow between different cooling targets. For example, the connection tube 200 may be connected between battery modules and configured to transfer the cooling water supplied to one battery module to another battery module. Here, the connection tube 200 may be made of PA material, but the present invention is not limited to such a material.

In addition, the cooling device according to the present invention may further include a cooling fluid supply unit (not shown) configured to supply fluid, particularly the cooling water, to the fluid transport pipe 100 according to the present invention. For example, the cooling device according to the present invention may further include a chiller as the cooling fluid supply unit.

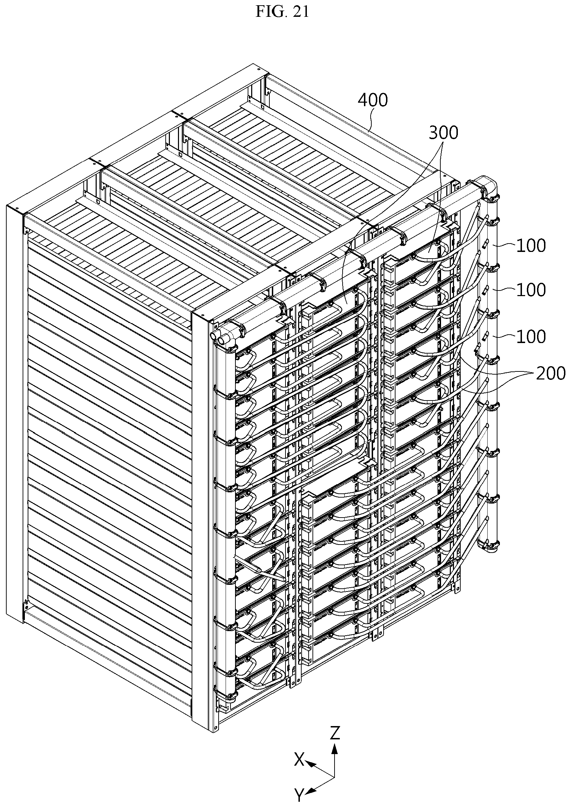

FIG. 21 is a diagram schematically showing the configuration of an energy storage system according to an embodiment of the present invention.

Referring to FIG. 21, the energy storage system according to the present invention includes the fluid transport pipe 100 according to the present invention. Moreover, the energy storage system according to the present invention may further include a plurality of fluid transport pipes 100 and the cooling fluid supply unit, as previously described in the cooling device. That is, the energy storage system according to the present invention may include the cooling device according to the present invention as shown in FIG. 20.

In addition, the energy storage system according to the present invention may include one or more battery modules 300. In particular, the energy storage system may include a plurality of battery modules 300, and the plurality of battery modules 300 may be electrically connected to each other in series and/or parallel. At this time, each battery module 300 may include a plurality of battery cells (secondary batteries).

In addition, the energy storage system according to the present invention may further include a rack frame 400 for accommodating one or more battery modules 300. For example, the energy storage system according to the present invention may include a rack frame 400 so that a plurality of battery modules 300 are accommodated in the upper and lower directions and/or the horizontal directions.

In addition, the energy storage system according to the present invention may further include a control unit for controlling or monitoring the charging and discharging operation of the battery module 300, measuring the temperature inside or outside the energy storage system, or controlling the cooling device according to the present invention.

Moreover, the energy storage system according to the present invention may further include various components of the energy storage system known at the time of filing of this application. For example, the energy storage system according to the present invention may further include a container for accommodating components therein as shown in FIG. 21.

Meanwhile, in this specification, terms indicating directions such as "upper", "lower", "left", "right", "front", and "rear" may be used, but these terms are only for convenience of explanation, and it is obvious to those skilled in the art that these terms may vary depending the location of the a object or the location of an observer. In addition, in this specification, the terms "inner" and "outer" may be used, but unless otherwise specified, for each component, the inner direction may refer to a direction toward the center, and the outer direction may refer to a direction opposite thereto.

The present invention has been described in detail. However, it should be understood that the detailed description and specific examples, while indicating preferred embodiments of the invention, are given by way of illustration only.

### Reference Signs

100: fluid transport pipe
110: main pipe
111: conduit
111a: first conduit, 111b: second conduit
112: main housing
120: branch pipe
121: branch unit
121a: seating part, 121b: conduit part
122: cap unit
122a: seating cap, 122b: conduit cap
200: connection tube
300: battery module
400: rack frame
R: branch hole
H: main flow path
H1: first flow path, H2: second flow path
N: branch flow path
V: hollow
G1: seating groove
P1: first pipe, P2: second pipe

## Claims

1. A fluid transport pipe (100), comprising:
a main pipe (110) having a shape elongated in one direction and configured to have a main flow path (H) formed therein in a longitudinal direction so that a branch hole (R) is formed in the middle of the main flow path (H); and
a branch pipe (120) having a branch flow path (N) formed therein and configured to be detachable in a portion where the branch hole (R) of the main pipe (110) is formed,
wherein the main pipe (110) has a plurality of conduits (111) therein, and
wherein the branch pipe (120) is provided in plurality, and at least one of the plurality of branch pipes (120) is configured to be detachable from the plurality of conduits (111), respectively.

2. The fluid transport pipe (100) according to claim 1,
wherein the branch pipe (120) is configured to be coupled to the main pipe (110) so that an extension direction of the branch flow path (N) is inclined at an acute angle with respect to an extension direction of the main flow path (H).

3. The fluid transport pipe (100) according to claim 1,
wherein the plurality of branch pipes (120) are respectively configured to be coupled to the plurality of conduits (111) in a state of being inclined in the same direction.

4. The fluid transport pipe (100) according to claim 1,
wherein the main pipe (110) further includes a main housing (112) configured to have a hollow (V) so that the plurality of conduits (111) are accommodated together in the hollow (V).

5. The fluid transport pipe (100) according to claim 4,
wherein the plurality of conduits (111) are configured to be at least partially spaced apart from an inner surface of the main housing (112).

6. The fluid transport pipe (100) according to claim 4,
wherein the plurality of conduits (111) are disposed to be spaced apart from each other by a predetermined distance within the hollow (V) of the main housing (112).

7. The fluid transport pipe (100) according to claim 1,
wherein the main pipe (110) is configured so that both longitudinal ends of the main flow path (H) are open.

8. The fluid transport pipe (100) according to claim 1,
wherein the main pipe (110) has a fastening hole (C1, C2) formed around the branch hole (R), and
wherein the branch pipe (120) is configured to be bolted to the fastening hole (C1, C2) of the main pipe (110).

9. The fluid transport pipe (100) according to claim 1,
wherein the branch pipe (120) includes a branch unit (121), and
wherein the branch unit (121) includes:
a seating part (121a) seated on a surface of the main pipe, and
a conduit part (121b) having a hollow formed as the branch flow path (N) and configured so that one end thereof is connected to the seating part (121a) and extends to be inclined at a predetermined angle from the seating part (121a).

10. The fluid transport pipe (100) according to claim 9,
wherein the main pipe (110) has a seating groove (G1) formed so that the seating part (121a) is seated therein.

11. The fluid transport pipe (100) according to claim 9,
wherein the branch pipe (120) further includes a cap unit (122) made of a material with lower thermal conductivity than the branch unit (121) and configured to surround at least a part of the branch unit (121) from the outside.

12. The fluid transport pipe (100) according to claim 11,
wherein the cap unit (122) includes a seating cap (122a) configured to surround the seating part (121a) from the outside and a conduit cap (122b) configured to surround the conduit part (121b) from the outside.

13. The fluid transport pipe (100) according to claim 11,
wherein the cap unit (122) is configured to be at least partially spaced apart from the branch unit (121) by a predetermined distance.

14. A cooling device, comprising the fluid transport pipe (100) according to any one of claims 1 to 13.

15. An energy storage system, comprising the fluid transport pipe (100) according to any one of claims 1 to 13.

## Patentansprüche

1. Fluidtransportrohr (100), umfassend:
ein Hauptrohr (110), das eine in einer Richtung längliche Form aufweist und derart ausgelegt ist, dass ein Hauptströmungspfad (H) darin in einer Längsrichtung ausgebildet ist, sodass ein Abzweigloch (R) in der Mitte des Hauptströmungspfads (H) ausgebildet ist; und
ein Abzweigrohr (120), das einen Abzweigströmungspfad (N) darin ausgebildet aufweist und derart ausgelegt ist, dass es in einem Abschnitt, in dem das Abzweigloch (R) des Hauptrohrs (110) ausgebildet ist, lösbar ist,
wobei das Hauptrohr (110) eine Mehrzahl von Leitungen (111) darin aufweist, und
wobei das Abzweigrohr (120) in einer Mehrzahl vorgesehen ist und zumindest eines der Mehrzahl von Abzweigrohren (120) derart ausgelegt ist, dass es jeweils von der Mehrzahl von Leitungen (111) lösbar ist.

2. Fluidtransportrohr (100) nach Anspruch 1,
wobei das Abzweigrohr (120) ausgelegt ist, mit dem Hauptrohr (110) gekoppelt zu werden, so dass eine Erstreckungsrichtung des Abzweigströmungspfads (N) in Bezug auf eine Erstreckungsrichtung des Hauptströmungspfads (H) in einem spitzen Winkel geneigt ist.

3. Fluidtransportrohr (100) nach Anspruch 1,
wobei die Mehrzahl von Abzweigrohren (120) jeweils ausgelegt sind, mit der Mehrzahl von Leitungen (111) in einem Zustand gekoppelt zu werden, in dem sie in derselben Richtung geneigt sind.

4. Fluidtransportrohr (100) nach Anspruch 1,
wobei das Hauptrohr (110) ferner ein Hauptgehäuse (112) umfasst, das derart ausgelegt ist, dass es einen Hohlraum (V) aufweist, so dass die Mehrzahl von Leitungen (111) zusammen in dem Hohlraum (V) aufgenommen sind.

5. Fluidtransportrohr (100) nach Anspruch 4,
wobei die Mehrzahl von Leitungen (111) ausgelegt ist, zumindest teilweise von einer Innenfläche des Hauptgehäuses (112) beabstandet zu sein.

6. Fluidtransportrohr (100) nach Anspruch 4,
wobei die Mehrzahl von Leitungen (111) derart angeordnet ist, dass sie innerhalb des Hohlraums (V) des Hauptgehäuses (112) um einen vorbestimmten Abstand voneinander beabstandet sind.

7. Fluidtransportrohr (100) nach Anspruch 1,
wobei das Hauptrohr (110) derart ausgelegt ist, dass beide Längsenden des Hauptströmungspfads (H) offen sind.

8. Fluidtransportrohr (100) nach Anspruch 1,
wobei das Hauptrohr (110) ein Befestigungsloch (C1, C2) aufweist, das um das Abzweigloch (R) herum ausgebildet ist, und
wobei das Abzweigrohr (120) ausgelegt ist, mit dem Befestigungsloch (C1, C2) des Hauptrohrs (110) verschraubt zu werden.

9. Fluidtransportrohr (100) nach Anspruch 1,
wobei das Abzweigrohr (120) eine Abzweigeinheit (121) umfasst, und
wobei die Abzweigeinheit (121) umfasst:
ein Sitzteil (121a), das auf einer Oberfläche des Hauptrohrs sitzt, und
ein Leitungsteil (121b), das einen als der Abzweigströmungspfad (N) ausgebildeten Hohlraum aufweist und derart ausgelegt ist, dass ein Ende davon mit dem Sitzteil (121a) verbunden ist und sich derart erstreckt, dass es in einem vorbestimmten Winkel in Bezug auf das Sitzteil (121a) geneigt ist.

10. Fluidtransportrohr (100) nach Anspruch 9,
wobei das Hauptrohr (110) eine Sitznut (GI) aufweist, welche derart ausgebildet ist, dass das Sitzteil (121a) darin sitzt.

11. Fluidtransportrohr (100) nach Anspruch 9,
wobei das Abzweigrohr (120) ferner eine Kappeneinheit (122) umfasst, die aus einem Material mit geringerer Wärmeleitfähigkeit als die Abzweigeinheit (121) hergestellt ist und derart ausgelegt ist, dass sie einen Teil der Abzweigeinheit (121) von außen umgibt.

12. Fluidtransportrohr (100) nach Anspruch 11,
wobei die Kappeneinheit (122) eine Sitzkappe (122a), die ausgelegt ist, das Sitzteil (121a) von außen zu umgeben, und eine Leitungskappe (122b), die dazu konfiguriert ist, das Leitungsteil (121b) von außen zu umgeben, umfasst.

13. Fluidtransportrohr (100) nach Anspruch 11,
wobei die Kappeneinheit (122) derart ausgelegt ist, dass sie zumindest teilweise um einen vorbestimmten Abstand von der Abzweigeinheit (121) beabstandet ist.

14. Kühlvorrichtung, umfassend das Fluidtransportrohr (100) nach einem der Ansprüche 1 bis 13.

15. Energiespeichersystem, umfassend das Fluidtransportrohr (100) nach einem der Ansprüche 1 bis 13.

## Revendications

1. Tuyau de transport de fluide (100), comprenant :
un tuyau principal (110) ayant une forme allongée dans une direction et configuré pour avoir un chemin d'écoulement principal (H) formé à l'intérieur de celui-ci dans une direction longitudinale de sorte qu'un trou de dérivation (R) soit formé au milieu du chemin d'écoulement principal (H) ; et
un tuyau de dérivation (120) ayant un chemin d'écoulement de dérivation (N) formé à l'intérieur de celui-ci et configuré pour être détachable dans une portion où le trou de dérivation (R) du tuyau principal (110) est formé,
dans lequel le tuyau principal (110) comporte une pluralité de conduits (111) à l'intérieur de celui-ci, et
dans lequel le tuyau de dérivation (120) est prévu en pluralité, et au moins l'un de la pluralité de tuyaux de dérivation (120) est configuré pour être détachable de la pluralité de conduits (111), respectivement.

2. Tuyau de transport de fluide (100) selon la revendication 1,
dans lequel le tuyau de dérivation (120) est configuré pour être couplé au tuyau principal (110) de sorte qu'une direction d'extension du chemin d'écoulement de dérivation (N) soit inclinée selon un angle aigu par rapport à une direction d'extension du chemin d'écoulement principal (H).

3. Tuyau de transport de fluide (100) selon la revendication 1,
dans lequel la pluralité de tuyaux de dérivation (120) est respectivement configurée pour être couplée à la pluralité de conduits (111) dans un état d'inclinaison dans la même direction.

4. Tuyau de transport de fluide (100) selon la revendication 1,
dans lequel le tuyau principal (110) comprend en outre un boîtier principal (112) configuré pour avoir une cavité (V) de sorte que la pluralité de conduits (111) soit logée ensemble dans la cavité (V).

5. Tuyau de transport de fluide (100) selon la revendication 4,
dans lequel la pluralité de conduits (111) est configurée pour être au moins partiellement espacée d'une surface intérieure du boîtier principal (112).

6. Tuyau de transport de fluide (100) selon la revendication 4,
dans lequel la pluralité de conduits (111) est disposée de manière à être espacée les uns des autres d'une distance prédéterminée à l'intérieur de la cavité (V) du boîtier principal (112).

7. Tuyau de transport de fluide (100) selon la revendication 1,
dans lequel le tuyau principal (110) est configuré de sorte que les deux extrémités longitudinales du chemin d'écoulement principal (H) soient ouvertes.

8. Tuyau de transport de fluide (100) selon la revendication 1,
dans lequel le tuyau principal (110) comporte un trou de fixation (Cl, C2) formé autour du trou de dérivation (R), et
dans lequel le tuyau de dérivation (120) est configuré pour être boulonné au trou de fixation (Cl, C2) du tuyau principal (110).

9. Tuyau de transport de fluide (100) selon la revendication 1,
dans lequel le tuyau de dérivation (120) comprend une unité de dérivation (121), et
dans lequel l'unité de dérivation (121) comprend :
une partie d'assise (121a) assise sur une surface du tuyau principal, et
une partie de conduit (121b) ayant une cavité formée en tant que chemin d'écoulement de dérivation (N) et configurée de sorte qu'une extrémité de celle-ci soit reliée à la partie d'assise (121a) et s'étende de manière à être inclinée selon un angle prédéterminé à partir de la partie d'assise (121a).

10. Tuyau de transport de fluide (100) selon la revendication 9,
dans lequel le tuyau principal (110) comporte une rainure d'assise (GI) formée de sorte que la partie d'assise (121a) soit assise dans celle-ci.

11. Tuyau de transport de fluide (100) selon la revendication 9,
dans lequel le tuyau de dérivation (120) comprend en outre une unité de capuchon (122) constituée d'un matériau ayant une conductivité thermique inférieure à celle de l'unité de dérivation (121) et configurée pour entourer au moins une partie de l'unité de dérivation (121) depuis l'extérieur.

12. Tuyau de transport de fluide (100) selon la revendication 11,
dans lequel l'unité de capuchon (122) comprend un capuchon d'assise (122a) configuré pour entourer la partie d'assise (121a) depuis l'extérieur et un capuchon de conduit (122b) configuré pour entourer la partie de conduit (121b) depuis l'extérieur.

13. Tuyau de transport de fluide (100) selon la revendication 11,
dans lequel l'unité de capuchon (122) est configurée pour être au moins partiellement espacée de l'unité de dérivation (121) d'une distance prédéterminée.

14. Dispositif de refroidissement, comprenant le tuyau de transport de fluide (100) selon l'une quelconque des revendications 1 à 13.

15. Système de stockage d'énergie, comprenant le tuyau de transport de fluide (100) selon l'une quelconque des revendications 1 à 13.
